# EUROPÄISCHE PATENTSCHRIFT

(11) **EP 0 951 618 B1**
(45) Veröffentlichungstag und Bekanntmachung des Hinweises auf die Patenterteilung: **12.02.2003**
(21) Anmeldenummer: 98954055.4
(22) Anmeldetag: 06.11.1998
(51) Int. Cl.: F16B 12/20

(54) **BESCHLAG**
FURNITURE FITTING
FERRURE

(30) Priorität: 07.11.1997 AT 188297; 20.02.1998 AT 30898
(43) Veröffentlichungstag der Anmeldung: 27.10.1999
(73) Patentinhaber: Julius Blum Gesellschaft m.b.H., 6973 Höchst (AT)
(72) Erfinder: HUBER, Edgar, A-6971 Hard (AT)
(74) Vertreter: Torggler, Paul Norbert, Dr.
(86) Internationale Anmeldenummer: AT9800274
(87) Internationale Veröffentlichungsnummer: WO99024723

(56) Entgegenhaltungen:
- EP-A- 0 610 765
- DE-U- 29 506 600
- DE-U- 29 804 684

## Beschreibung

Die Erfindung bezieht sich auf einen Beschlag zur lösbaren Befestigung an einem Möbelteil mit einem am Möbelteil anliegenden Beschlagkörper, mindestens einer in eine Bohrung des Möbelteiles einsetzbaren dübelartigen Spreizhülse, an deren Mantel mehrere in axialer Richtung versetzte Haltevorsprünge ausgebildet sind, vorzugsweise mit einer konischen Spitze und einem stiftförmigen Spreizteil für die Spreizhülse, der durch den Beschlagkörper ragt, wobei an der vom Möbelteil abgewandten Seite des Beschlagkörpers ein Spannteil für die Spreizhülse angeordnet ist, der sich vorzugsweise am Beschlagkörper abstützt.

Ausgehend vom Stand der Technik, DE-U-2950600, ist es Aufgabe der Erfindung, einen Beschlag für Möbel zu schaffen, der in besonders kleinen Bohrlöchern verankerbar ist, d.h. dessen Dübel bzw. Spreizhülsen und Spreizteile einen sehr kleinen Durchmesser aufweisen. Dabei soll jedoch ein guter Halt des Möbelbeschlages am Möbelteil gewährleistet sein. Insbesondere ist an Bohrlöcher mit einem Durchmesser von 5 mm gedacht, da diese sich bei Systembohrungen als inoffizielle Norm durchgesetzt haben.

Die erfindungsgemäße Aufgabe wird dadurch gelöst, daß der Spreizteil im Beschlagkörper axial unverschiebbar gehalten ist und daß die Spreizhülse mittels eines Spannteiles relativ zum Spreizteil und zum Beschlagkörper axial bewegbar ist.

Dadurch kommt es beim Verspannen des Beschlages zu einer Komprimierung des Holzmaterials im Dübelbereich, wodurch der Halt des Dübels bzw. der Spreizhülse im Möbelteil verbessert wird.

Vorteilhaft ist vorgesehen, daß der Spreizteil zwei radial abstehende Zapfen aufweist, die in zumindest bereichsweise schräg zu den Erzeugenden der Spreizhülse verlaufende Führungsschlitze in der Spreizhülse ragen.

Ein anderes Ausführungsbeispiel der Erfindung sieht vor, daß die Spreizhülse zwei diametral angeordnete und nach innen abstehende Zapfen aufweist, die in zumindestens bereichsweise schräg zu den Erzeugenden des Spreizteiles verlaufende Nuten oder Schlitze des Spreizteiles ragen.

Vorteilhaft ist weiters vorgesehen, daß die Spreizhülse mittels einer Verdrehsicherung im Beschlagkörper verankert ist und daß der Spreizteil über einen Griff oder Werkzeugaufnahmeteil relativ zur Spreizhülse verdrehbar ist.

Ein Ausführungsbeispiel der Erfindung sieht vor, daß die Spreizhülse an ihrem zum Beschlagkörper gewendeten Ende einen nach außen umgebördelten Rand aufweist, mit dem sie in einen ringförmigen Zugteil eingehängt ist, der zwei Laschen aufweist, die durch separate Schlitze des Beschlagkörpers ragen und die, an der vom Möbelteil abgewendeten Seite des Beschlagkörpers, an einem, vorzugsweise als Kipphebel ausgebildeten Spannteil angelenkt sind.

Ein weiteres Ausführungsbeispiel der Erfindung sieht vor, daß der Spreizteil von der Sichtfläche des Beschlagkörpers her durch diesen durchgesteckt und durch Stauchung des Beschlagkörpers in diesem fixiert ist und an seinem beschlagkörperseitigem Ende einen Anschlag aufweist, der am Beschlagkörper sichtflächenseitig anliegt.

Vorteilhaft ist weiters vorgesehen, daß die Spreizhülse im Mantel mit radial durchgehenden Öffnungen versehen ist.

Die Spreizhülsen sind vorteilhaft aus einem Metall, insbesondere aus vergütetem Stahl gefertigt. Dabei kann die Wandstärke der Spreizhülsen sehr dünn gehalten werden. Sie beträgt maximal 1 mm und liegt vorzugsweise zwischen 0,7 und 0,8 mm. Vorteilhaft ist die Spreizhülse durch eine Phosphatierung oberflächenbehandelt.

Nachfolgend werden verschiedene Ausführungsbeispiele der Erfindung anhand der Figuren der beiliegenden Zeichnungen beschrieben.

Es zeigen:
- Die Fig. 1 und 2: je ein Schaubild eines erfindungsgemäßen Möbelbeschlages;
- die Fig. 3: ein Schaubild eines erfindungsgemäßen Möbelbeschlages, wobei die Teile auseinandergezogen gezeichnet sind;
- die Fig. 4: eine Draufsicht auf einen erfindungsgemäßen Beschlag;
- die Fig. 5: die Stellung eines der Mitnehmerzapfen im Führungsschlitz bei der Stellung des Griffes gemäß Fig. 4;
- die Fig. 6: einen Schnitt nach der Linie B-B der Fig. 4;
- die Fig. 7: einen Schnitt nach der Linie A-A der Fig. 4;
- die Fig. 8: eine Draufsicht auf einen erfindungsgemäßen Beschlag;
- die Fig. 9: die Stellung des Mitnehmerzapfens im Führungsschlitz bei der Stellung des Griffes gemäß Fig. 8;
- die Fig. 10: einen Schnitt nach der Linie B-B der Fig. 8;
- die Fig. 11: einen Schnitt nach der Linie A-A der Fig. 8;
- die Fig. 12: eine weitere Draufsicht auf einen erfindungsgemäßen Beschlagteil;
- die Fig. 13: die Stellung des Mitnehmerzapfens im Führungsschlitz bei der Stellung des Griffes gemäß Fig. 12;
- die Fig. 14: einen Schnitt nach der Linie B-B der Fig. 12;
- die Fig. 15: einen Schnitt nach der Linie A-A der Fig. 12;
- die Fig. 16 und 17: je ein Schaubild eines weiteren Ausführungsbeispiels eines erfindungsgemäßen Beschlages;
- die Fig. 18: ein Schaubild des Beschlages, wobei die Teile auseinandergezogen gezeichnet sind;
- die Fig. 19: eine Draufsicht auf den erfindungsgemäßen Beschlag;
- die Fig. 20: einen Schnitt nach der Linie A-A der Fig. 19;
- die Fig. 21: einen Schnitt nach der Linie B-B der Fig. 19;
- die Fig. 22: einen Schnitt nach der Linie A-A der Fig. 19, wobei die Spreizhülle in der Spreizstellung gezeigt ist;
- die Fig. 23: einen Schnitt nach der Linie B-B der Fig. 19, wobei die Spreizhülle in der Spreizstellung gezeichnet ist;
- die Fig. 24: einen Querschnitt durch den erfindungsgemäßen Beschlag;
- die Fig. 25: einen Schnitt nach der Linie B-B der Fig. 24;
- die Fig. 26 und 27: jeweils ein Schaubild eines weiteren Ausführungsbeispieles des Beschlages;
- die Fig. 28: ein Schaubild dieses Ausführungsbeispiels des Beschlages, wobei die Teile auseinandergezogen gezeichnet sind;
- die Fig. 29: eine Draufsicht auf dieses Ausführungsbeispiel;
- die Fig. 30: einen Schnitt nach der Linie A-A der Fig. 29;
- die Fig. 31: eine Draufsicht auf einen erfindungsgemäßen Beschlag, wobei der Spannhebel in der Spannstellung gezeigt ist;
- die Fig. 32: einen Schnitt nach der Linie A-A der Fig. 31;
- die Fig. 33 und 34: jeweils ein Schaubild eines weiteren Ausführungsbeispieles eines erfindungsgemäßen Beschlages;
- die Fig. 35: ein Schaubild eines Ausführungsbeispieles des Beschlages gemäß den Fig. 33 und 34, wobei die einzelnen Teile auseinandergezogen sind;
- die Fig. 36 und 37: jeweils ein Schaubild eines weiteren Ausführungsbeispieles eines erfindungsgemäßen Beschlages;
- die Fig. 38: ein Schaubild dieses Ausführungsbeispieles, wobei die Teile auseinandergezogen sind;
- die Fig. 39: eine Draufsicht auf dieses Ausführungsbeispieles eines erfindungsgemäßen Beschlages;
- die Fig. 40: einen Schnitt nach der Linie A-A der Fig. 39;
- die Fig. 41: eine Draufsicht auf ein weiteres Ausführungsbeispiel eines erfindungsgemäßen Beschlages;
- die Fig. 42: einen Schnitt nach der Linie A-A der Fig. 41;
- die Fig. 43: eine Draufsicht auf dieses Ausführungsbeispiel eines Beschlages, wobei der Griff in der Lösestellung gezeigt ist;
- die Fig. 44: einen Schnitt nach der Linie A-A der Fig. 43;
- die Fig. 45: ein Schaubild eines erfindungsgemäßen Möbelbeschlages, wobei die Teile auseinandergezogen gezeichnet sind;
- die Fig. 46a und 46b: ein Schaubild des Spreizteiles;
- die Fig. 47: eine Draufsicht auf einen erfindungsgemäßen Beschlag;
- die Fig. 48: einen Schnitt nach der Linie A-A der Fig. 47;
- die Fig. 49: einen Schnitt nach der Linie B-B der Fig. 47;
- die Fig. 50: den Ausschnitt A der Fig. 48;
- die Fig. 51: eine Draufsicht auf einen erfindungsgemäßen Beschlag in der verspannten Stellung;
- die Fig. 52: einen Schnitt nach der Linie A-A der Fig. 51;
- die Fig. 53: einen Schnitt nach der Linie B-B der Fig. 51;
- die Fig. 54: den Ausschnitt A der Fig. 52;
- die Fig. 55a und 55b: je ein Schaubild eines weiteren Ausführungsbeispieles eines Spreizteiles;
- die Fig. 56: eine weitere Draufsicht auf einen erfindungsgemäßen Beschlagteil;
- die Fig. 57: einen Schnitt nach der Linie A-A der Fig. 56;
- die Fig. 58: einen Schnitt nach der Linie B-B der Fig. 56;
- die Fig. 59: den Ausschnitt A der Fig. 57;
- die Fig. 60: eine Draufsicht auf den erfindungsgemäßen Beschlag in der Spannstellung;
- die Fig. 61: einen Schnitt nach der Linie A-A der Fig. 60;
- die Fig. 62: einen Schnitt nach der Linie B-B der Fig. 60;
- die Fig. 63: den Ausschnitt A der Fig. 61;
- die Fig. 64a, b, c: Schaubilder der Spreizhülse;
- die Fig. 65: einen Längsschnitt durch den Spreizteil und die Spreizhülse bei der Verankerung in Weichholz und
- die Fig. 66: einen Längsschnitt durch den Spreizteil und die Spreizhülse bei der Verankerung in Hartholz.

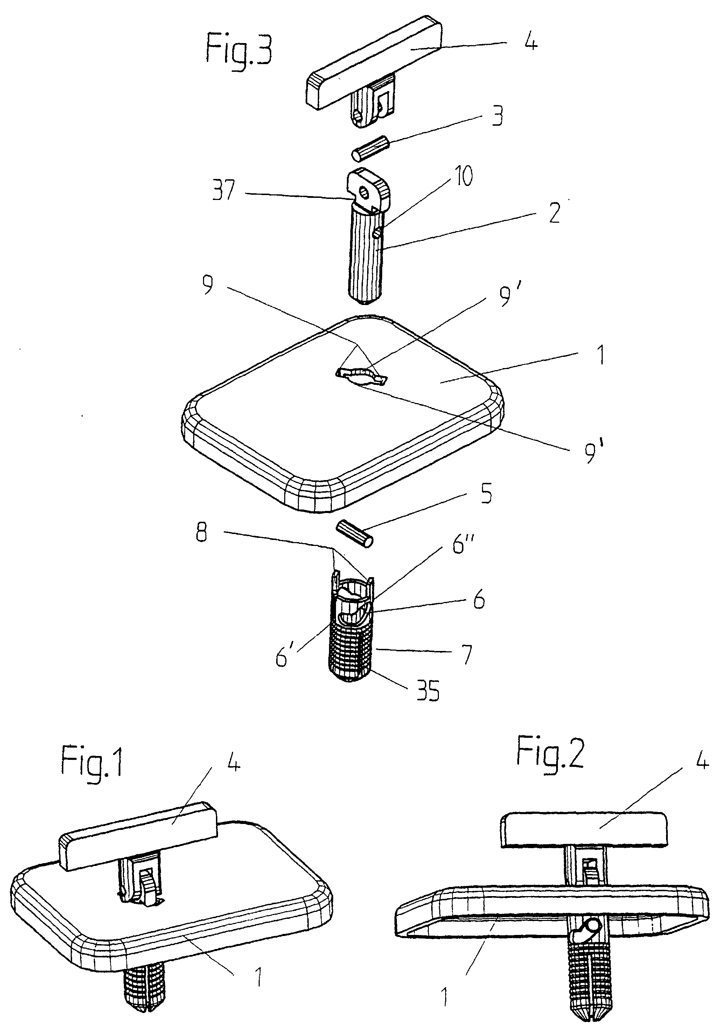

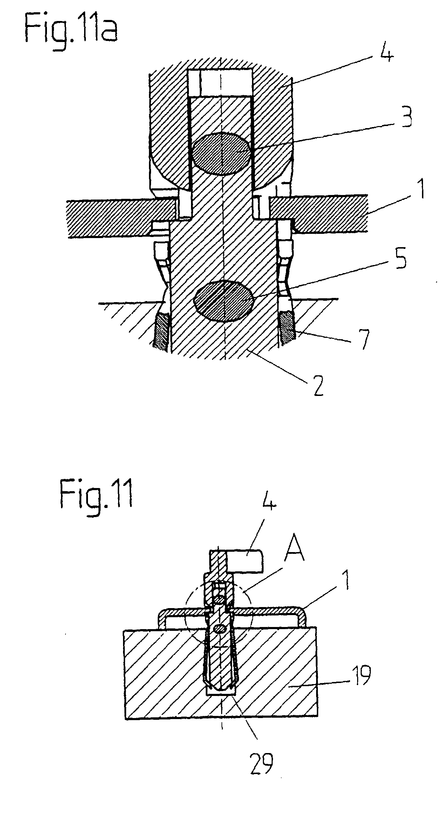

Im Ausführungsbeispiel nach den Fig. 1 bis 15 besteht der erfindungsgemäße Möbelbeschlag aus einem Beschlagkörper 1, der beispielsweise als Grundplatte für einen Scharnierarm ausgeführt ist, der Spreizhülse 7, dem stiftförmigen Spreizteil 2 und einem Griff 4.

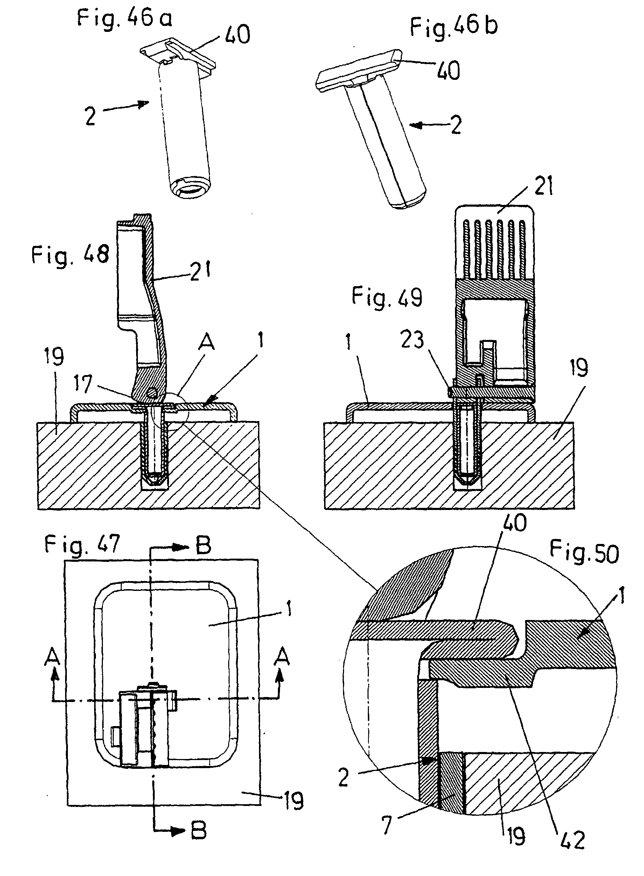

Die Spreizhülsen 7 sind dübelartig ausgeführt und werden von sehr dünnen Hülsen aus vorzugsweise vergütetem bzw. gehärtetem Stahl gebildet. Die Spreizhülsen 7 sind vorzugsweise oberflächenbehandelt. In den Ausführungsbeispielen ist eine Phosphatierung der Spreizhülsenmantelfläche vorgesehen. Die Spreizhülse 7 weist an ihrem Mantel mehrere axial versetzte rippenartige Vorsprünge auf, die den Halt im Holzmantel des Möbelteiles 19 verbessern. Die Spreizteile 2 können sowohl aus Metall als auch aus Kunststoff sein. Vorzugsweise wird jedoch ein Metall, insbesondere ein vergüteter bzw. gehärteter Stahl verwendet werden. Der Spreizteil 7 kann sowohl als Stift mit vollem Körper als auch als zylindrische Hülse (Fig. 46a, b) ausgebildet sein.

An der vom Möbelteil 19 abgewendeten Seite des Beschlagkörpers 1 ist der Spreizteil 2 über einen Bolzen an dem als Griff 4 ausgeführter Spannteil angelenkt. Der Griff 4 stützt sich unmittelbar am Beschlagkörper 1 ab und der Spreizteil 2 ist mittels des Griffes 4 drehbar.

Der Spreizteil 2 ragt dabei durch eine Öffnung im Beschlagkörper 1, die von zwei Schlitzen 9 und segmentartigen Aussparungen 9' gebildet wird.

Der Spreizteil 2 weist eine Öffnung 10 auf, in die ein Bolzen 5 eingesetzt ist. Der Bolzen 5 ragt beidseitig aus dem Spreizteil 2 heraus und mit seinen Enden, die als Mitnehmerzapfen dienen, in Führungsschlitze 6 in der Spreizhülse 7. Die Führungsschlitze 6 weisen einen Bereich 6' auf, der sich in Umfangrichtung der Spreizhülse 7 erstreckt und einen Bereich 6", der schräg zu den Erzeugenden der mit einem zylindrischen Mantel ausgeführten Spreizhülse 7 ausgerichtet ist.

Die Spreizhülse 7 weist weiters zwei Lappen 8 auf, die im montierten Zustand in die Schlitze 9 des Beschlagkörpers 1 ragen und eine Verdrehsicherung für die Spreizhülse 7 bilden.

Weiters ist die Spreizhülse 7 mit längsverlaufenden Schlitzen 35 versehen und sie weist an ihrem freien Ende schräg nach innen abgewinkelte Lappen 36 auf, die den Spreizteil 2 vorne abdecken.

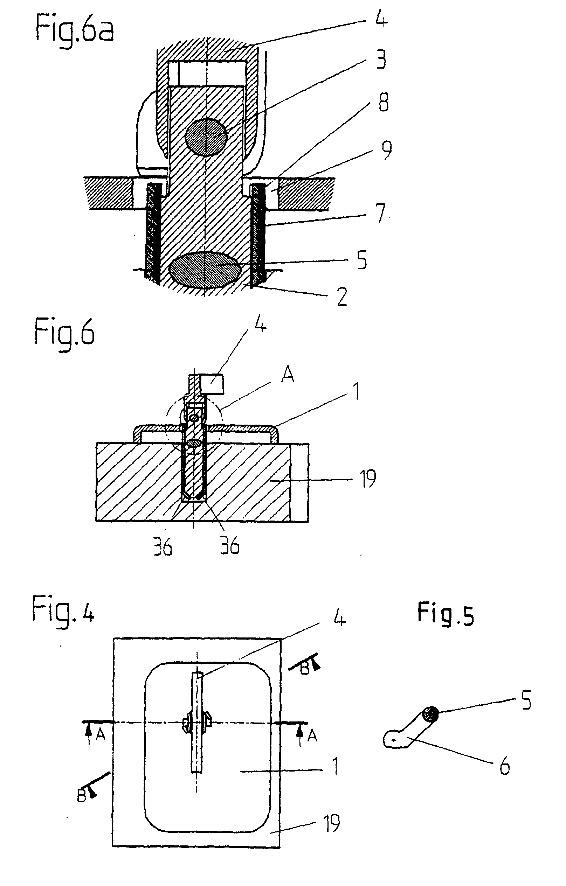

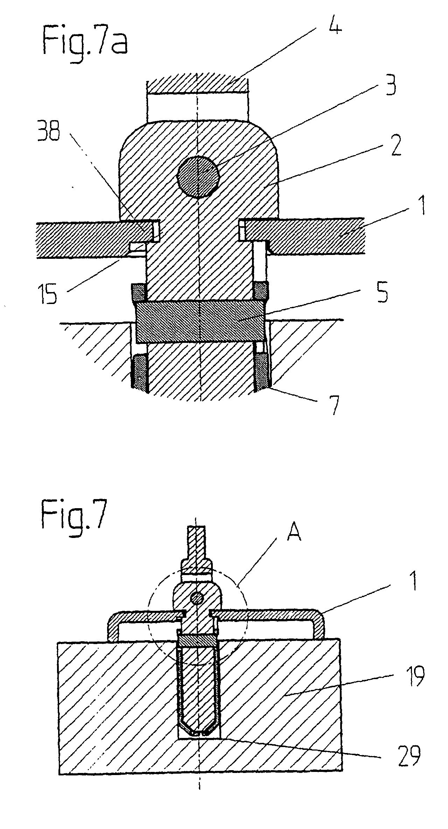

Bei der Montage des Beschlagkörpers 1 wird dieser, wie in den Fig. 4 und 6 gezeigt, auf den Möbelteil 19 aufgesetzt und die Spreizhülse 7 zusammen mit dem Spreizteil 2 in die Bohrung 29 im Möbelteil 19 gesteckt. Die Spreizhülse 7 ist dabei, wie aus den Fig. 6 und 7 ersichtlich, unverspannt. Der Bolzen 5 befindet sich in den Führungsschlitzen in der in der Fig. 5 gezeigten Stellung.

Der Spreizteil 2 ist mit Nuten 15 versehen (Fig. 7), in die Vorsprünge 38 des Beschlagkörpers 1 ragen. Dadurch wird eine axiale Relativbewegung des Spreizteiles 2 relativ zum Beschlagkörper 1 verhindert.

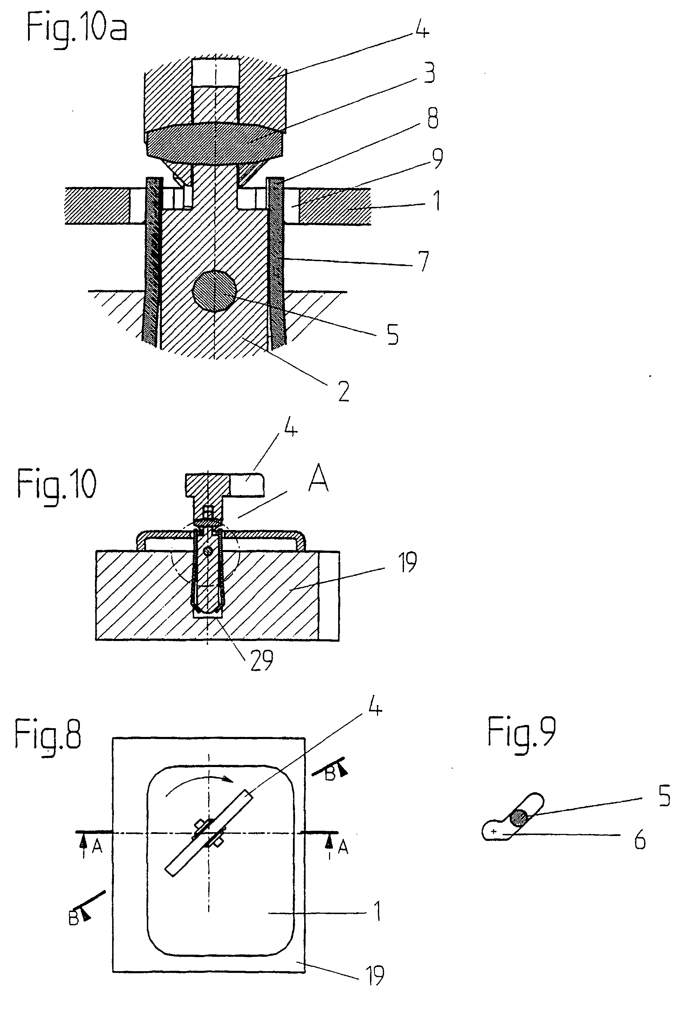

Zur Verspannung der Spreizhülse 7 und zur Fixierung des Beschlagkörpers 1 am Möbelteil 19 wird der Griff 4 gedreht, wodurch es zu einer Relativbewegung des Bolzens 5 relativ zur Spreizhülse 7 in den Führungsschlitzen 6 kommt. Die Spreizhülse 7 wird dabei, wie in den Fig. 9 und 10 gezeigt, angehoben, d.h. aus der Bohrung 29 im Möbelteil 19 geringfügig herausgezogen, während der Spreizteil 2 im Beschlagkörper 1 axial unverschiebbar gehalten ist. Dabei kommt es zu einem Spreizen der Spreizhülse 7, wie in der Fig. 10 gezeigt. Die Fig. 9 zeigt die Position des Bolzens 5 in den Führungsschlitzen 6 bei der in der Fig. 8 gezeigten Zwischenstellung des Griffes 4.

Durch die Lappen 8, die in den Schlitzen 9 des Beschlagkörpers 1 gehalten sind, wird verhindert, daß sich bei der Drehung des Griffes 4 und des Spreizteiles 2 die Spreizhülse 7 mitdreht.

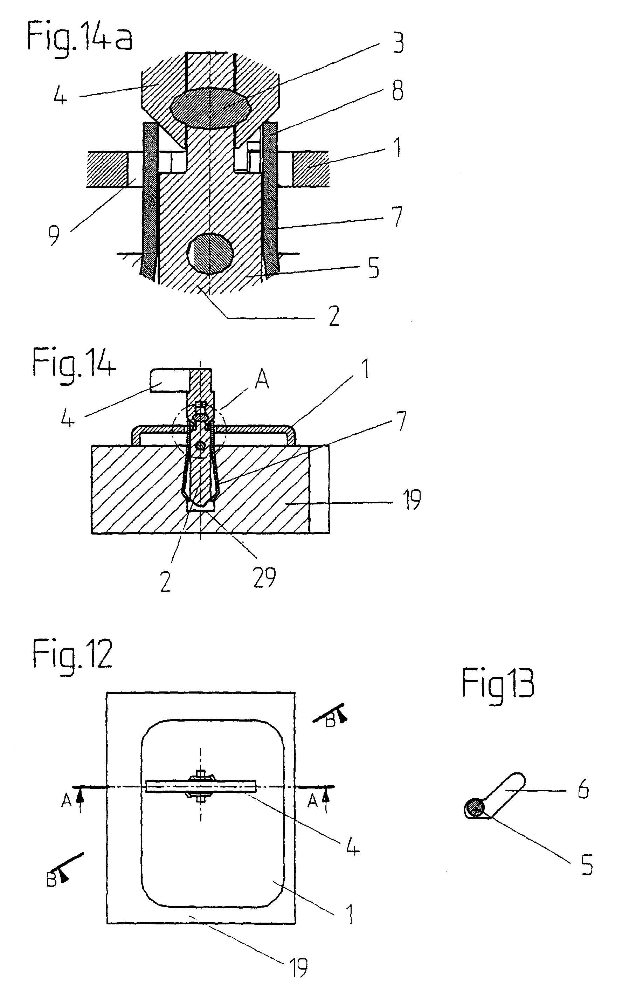

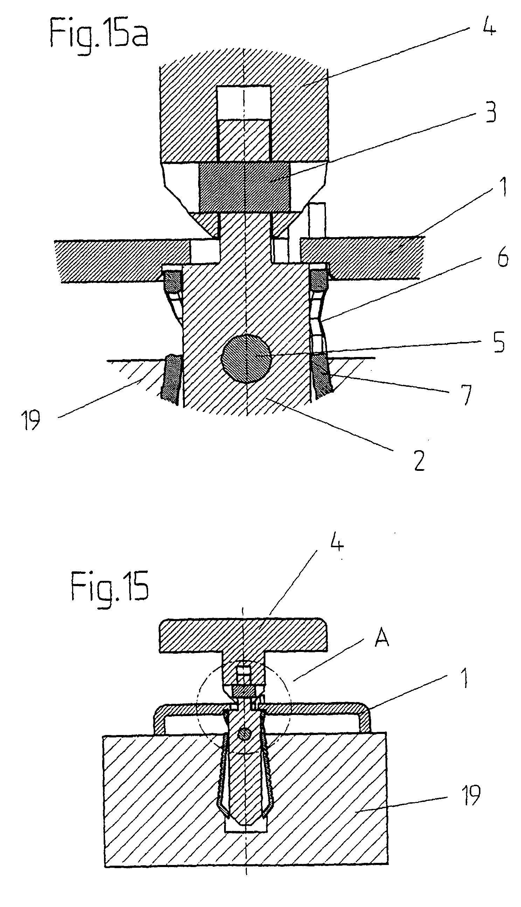

Zur endgültigen Verspannung der Spreizhülse 7 im Möbelteil 19 wird der Griff 4 in die in der Fig. 12 gezeigte Endstellung gebracht, wobei sich der Bolzen 5 innerhalb der Führungsschlitze 6 in der in der Fig. 13 gezeigten Stellung befindet. Die Spreizhülse 7 ist, wie aus den Fig. 14 und 15 ersichtlich, maximal auseinandergedrückt und in der Bohrung 29 des Möbelteils 19 fest verankert.

Die zum Griff 4 gewandte Stirnseite der Spreizhülse 7 wird vom Beschlagkörper 1 abgedeckt (siehe Fig. 15a), sodaß die Spreizhülse 7 nicht zu weit aus der Bohrung 29 herausgezogen werden kann.

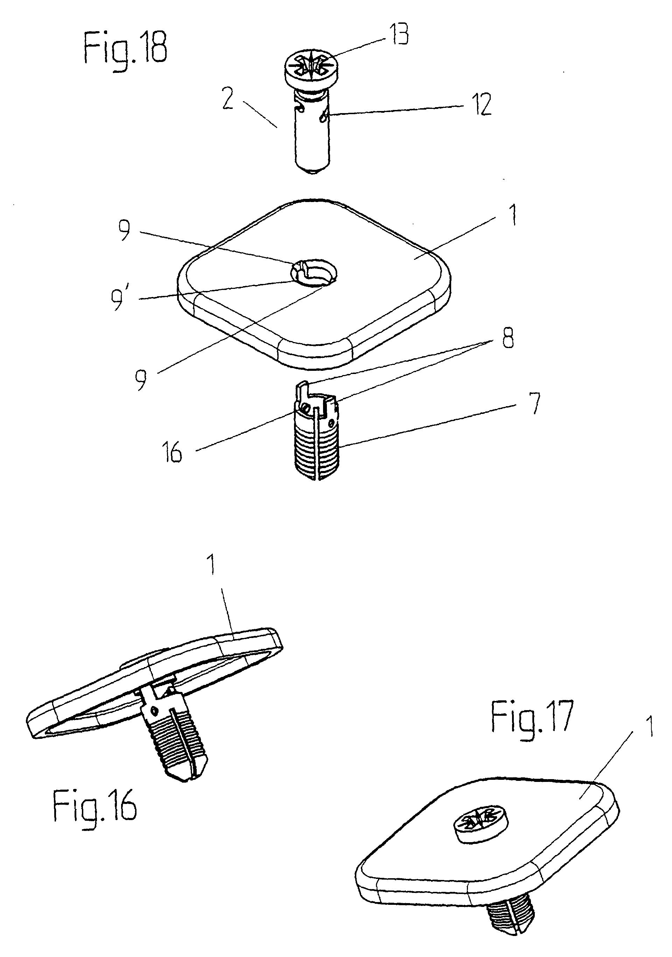

Im Ausführungsbeispiel nach den Fig. 16 bis 25 ist der Spreizteil 2 einstückig mit einem als Schraubenkopf ausgeführten Werkzeugaufnahmeteil 13 ausgebildet. Der Werkzeugaufnahmeteil 13 ist im Ausführungsbeispiel mit einem Kreuzschlitz für einen Kreuzschraubenzieher versehen.

Die Spreizhülse 7 unterscheidet sich von der Spreizhülse 7 des vorhergehenden Beispieles dadurch, daß sie am Innenmantel Zapfen 16 aufweist, die die Aufgabe des Bolzens 5 des vorhergehenden Ausführungsbeispieles übernehmen.

Der Spreizteil 2 ist mit Nuten 12 versehen, die den Führungsschlitzen 6 des vorhergehenden Ausführungsbeispieles entsprechen, und in die die Zapfen 16 der Spreizhülse 2 ragen. Die Nuten 12 sind wie die Führungsschlitze 6 abgewinkelt ausgeführt, mit einem entlang einer Umfangslinie des Spreizteiles 2 verlaufenden Bereich und einem schräg zum Beschlagkörper 1 weisenden Bereich. Die Führungsfunktion der Nuten 12 entspricht der der Führungsschlitze 6. Der Spreizteil 2 könnte auch mit einer mit dem Werkzeugaufnahmeteil 13 verbundenen Hülse ausgeführt sein, die anstelle der Nuten 12 wiederum Führungsschlitze für die Zapfen 16' aufweist.

Die Spreizhülse 7 weist wiederum Lappen 8 auf, die in Schlitze 9 im Beschlagkörper 1 ragen und die der Verdrehsicherung der Spreizhülse 7 dienen.

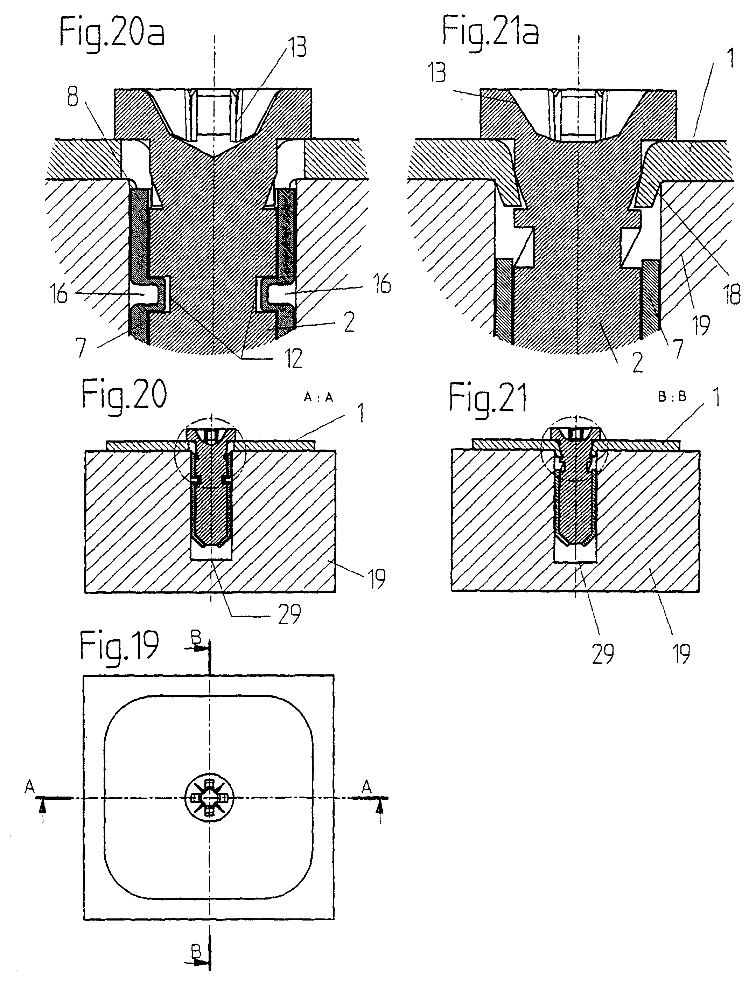

Zur Befestigung des Beschlagkörpers 1 wird dieser mit dem Spreizteil 2 und der Spreizhülse 7, wie in den Fig. 20, 21 gezeigt, an den Möbelteil 19 angelegt. Die Spreizhülse 7 ist unverspreizt und daher leicht in die Bohrung 29 im Möbelteil 19 einsetzbar.

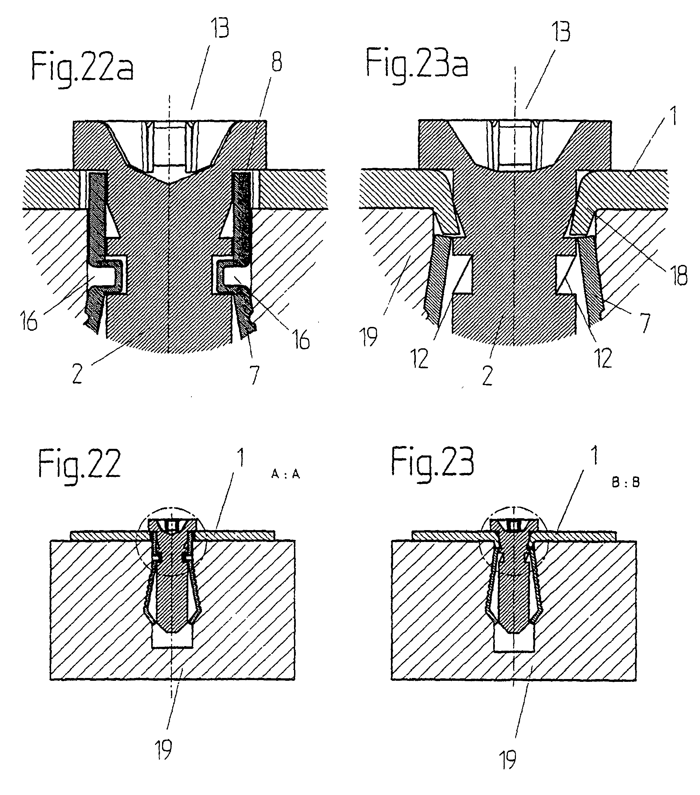

Durch Verdrehen des Spreizteiles 2 mittels eines Schraubenziehers wird die Spreizhülse 7 wie in den Fig. 22, 23 und 25 gespreizt und im Bohrloch 29 des Möbelteils 19 verankert.

Damit beim Lösen der Spreizhülse 7 der Spreizteil 2 nicht unbeabsichtigt aus der Bohrung 29 des Möbelteiles 19 herausgezogen wird, ist der Beschlagkörper 1 mit Vorsprüngen 18 versehen, die zum Spreizteil 2 gerichtet sind und an denen der Spreizteil 2, wenn er aus der Bohrung 29 herausbewegt wird, mit einer Schulter anliegt. Durch die Vorsprünge 18 ist der Spreizteil 2 im Beschlagkörper 1 verankert. Beim Zusammensetzen des Beschlages sind vor dem Einsetzen des Spreizteiles 2 die Vorsprünge 18 in etwa senkrecht zur Oberfläche des Beschlagkörpers 1 ausgerichtet.

Nachdem der Spreizteil 2 in den Beschlagkörper 1 gesteckt wurde, werden die Vorsprünge 18 gestaucht, sodaß sie die in den Fig. 21 und 23 gezeigte Position einnehmen und den Spreizteil 2 im Beschlagkörper 1 arretieren.

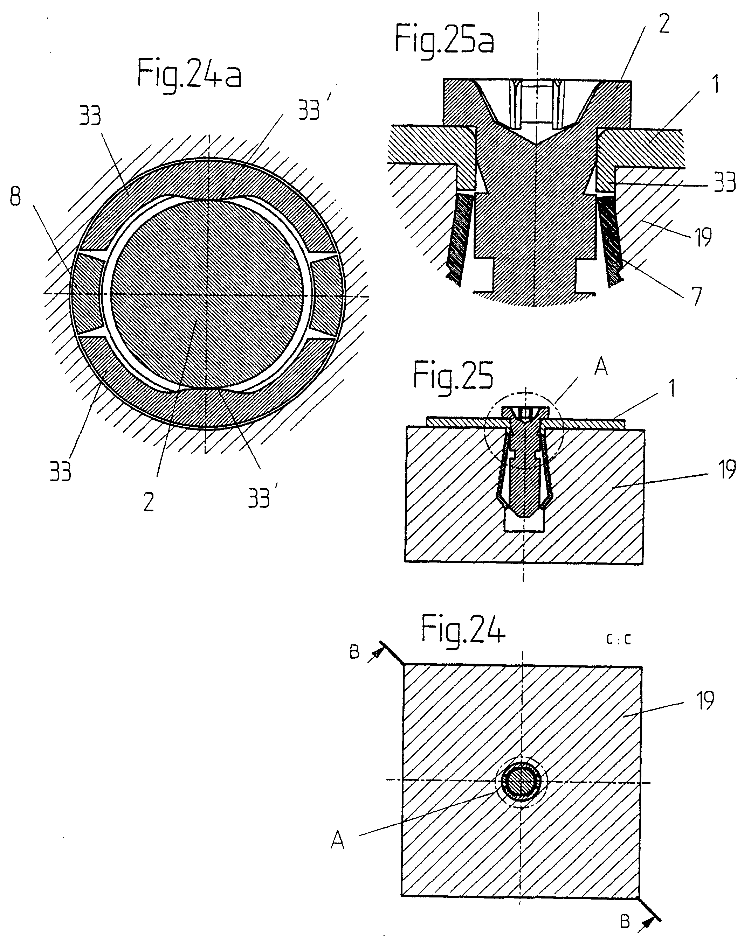

Im Ausführungsbeispiel nach der Fig. 25 weist der Beschlagkörper 1 einen in die Bohrung 29 ragenden Rand 33 auf. Die Lappen 8 der Spreizhülse 7 sind dabei in Schlitzen im Rand 33 aufgenommen. Ebenso wie im vorhergehenden Ausführungsbeispiel ist der Spreizteil 2 mittels Vorsprüngen des Beschlagkörpers 1 im Beschlagkörper arretiert. Die Vorsprünge sind aus dem Rand 33 gestaucht und bilden einerseits Noppen 33', die dem Spreizteil 2 eine Führung bieten und andererseits stirnseitige Anschläge für die Schulter des Spreizteiles 2, die ein Herausdrücken des Spreizteiles 2 aus dem Beschlagkörper 1 und somit aus der Bohrung 29 verhindern. Dadurch, daß der Spreizteil 2 im Beschlagkörper 1 axial verankert ist, wird beim Lösen des Beschlages die Spreizhülse 7 sicher in die Bohrung 29 hineingedrückt und von der Wandung der Bohrung 29 gelöst.

Im Ausführungsbeispiel nach der Fig. 25 liegt der Beschlagkörper 1 satt am Möbelteil 19.

Die Zapfen 16 werden im Ausführungsbeispiel von topfartigen Noppen der Spreizhülse 7 gebildet.

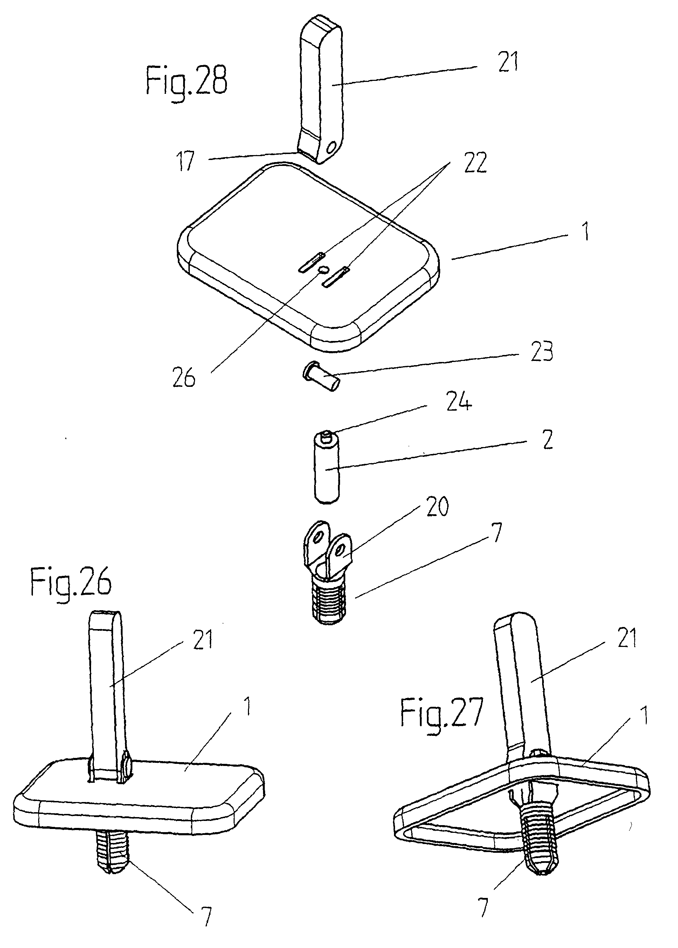

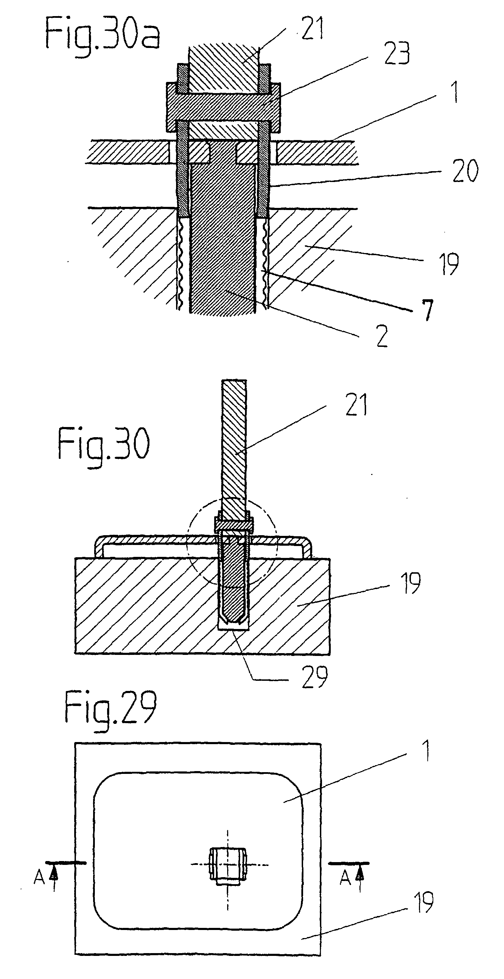

Im Ausführungsbeispiel nach den Fig. 26 bis 31 ist die Spreizhülse 7 mit zwei Laschen 20 versehen, die Löcher aufweisen, durch die ein Bolzen 23 ragt, über den die Spreizhülse 7 an einem Kipphebel 21 angelenkt ist. Der Kipphebel 21 dient als Spannteil für die Spreizhülse 7.

Die Laschen 20 ragen dabei durch Schlitze 22 im Beschlagkörper 1.

Der Spreizteil 2 ist als Zylinder ausgeführt und weist einen Zapfen 24 auf, der in ein Loch 26 im Beschlagkörper 1 einsteckbar ist. Vorzugsweise ist der Zapfen 24 im Beschlagkörper 1 vernietet.

Der Kipphebel 21 ist mit einem Nocken 17 versehen, mit dem er sich in der Spannstellung am Beschlagkörper 1 abstützt.

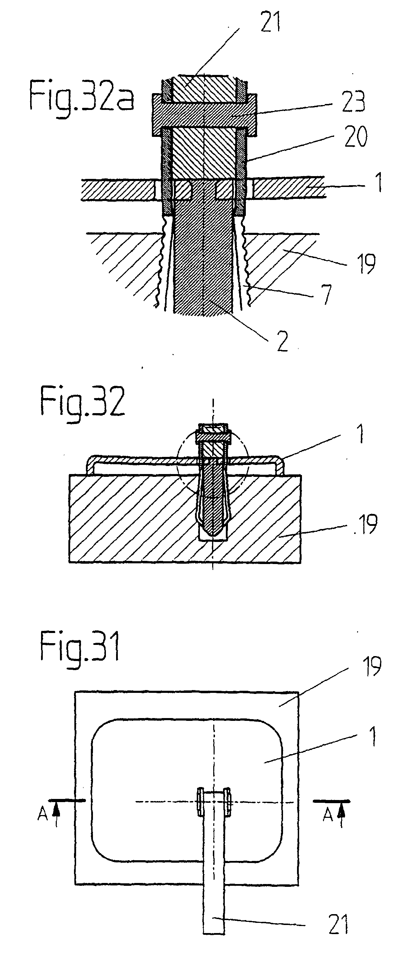

In der in den Fig. 26 bis 30 gezeigten Position befindet sich der Spannhebel 21 in der Lösestellung und die Spreizhülse 7 ist mit dem Spreizteil 2 in die Bohrung 29 des Möbelteiles 19 einsetzbar. Anschließend wird der Kipphebel 21 in die in der Fig. 31 gezeigte Stellung gekippt, worauf die Spreizhülse 7 über den Bolzen 23 und die Laschen 20 zum Beschlagkörper 1 gezogen und, wie in Fig. 32 gezeigt, gespreizt wird.

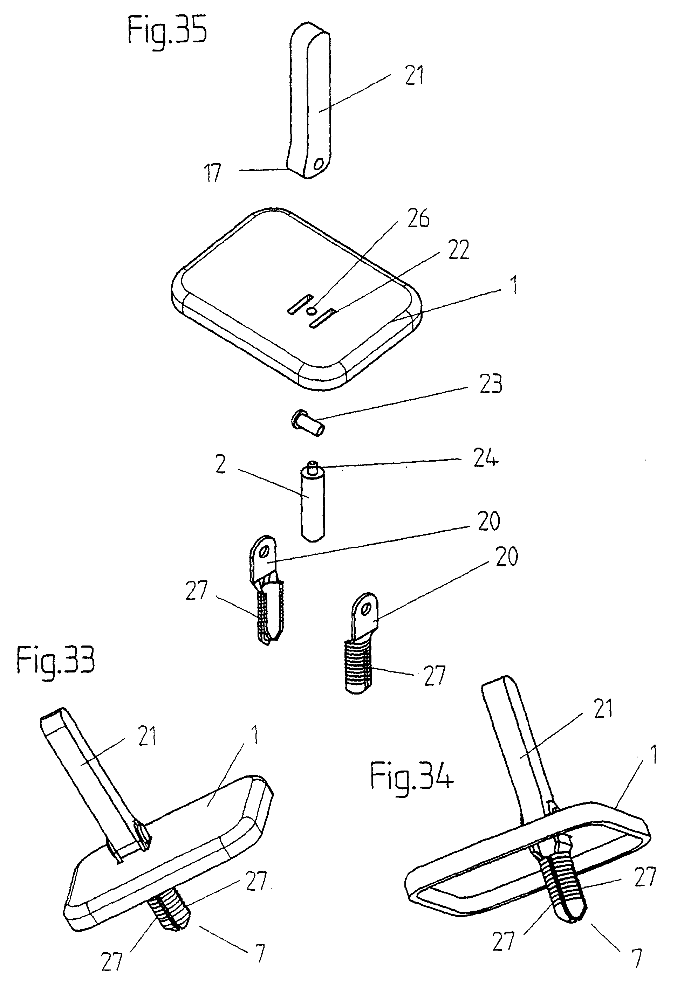

Im Ausführungsbeispiel nach den Fig. 33 bis 35 wird die Spreizhülse 7 von zwei komplementären Halbschalen 27 gebildet, die wiederum Laschen 20 aufweisen, über die sie in den Bolzen 23 und somit in den Kipphebel 21 eingehängt sind. Der Spreizteil 2 ist wie im vorhergehenden Ausführungsbeispiel mit einem Zapfen 24 versehen, der in ein Loch 26 des Beschlagkörpers 1 einsetzbar ist. Die Spreizhülse 7, die von den zwei Halbschalen 27 gebildet wird, wird ebenso wie im vorhergehenden Ausführungsbeispiel durch Kippen des Kipphebels 21, wobei die Halbschalen 27 zum Beschlagkörper 1 gezogen werden, in der Bohrung 29 des Möbelteils 19 verspreizt.

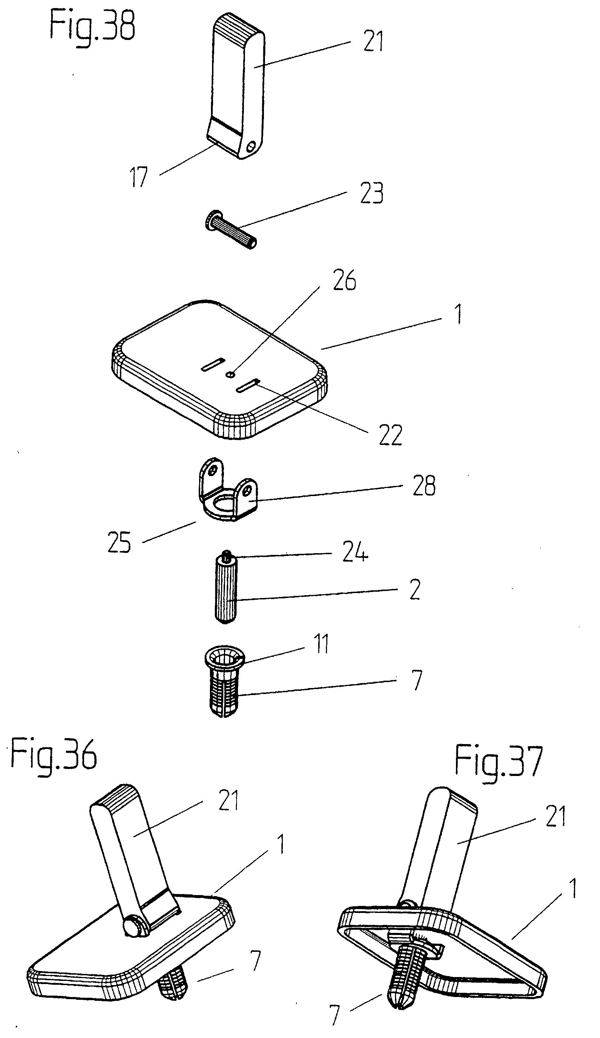

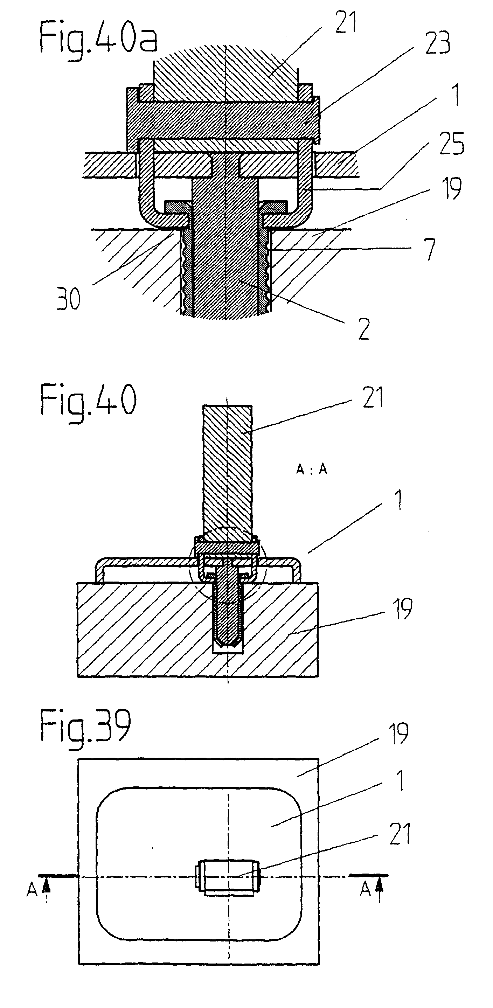

Im Ausführungsbeispiel nach den Fig. 36 bis 40 ist die Spreizhülse 7 in einen ringförmigen Zugteil 25 eingehängt, der zwei Laschen 28 aufweist, die durch Schlitze 22 im Beschlagkörper 1 ragen und in einem Bolzen 23 eingehängt sind, der die Laschen 28 mit dem Kipphebel 21 verbindet.

Der Spreizteil 2 ist gleich wie im vorangehenden Ausführungsbeispiel ausgeführt.

Die zylindrische Spreizhülse 7 weist einen nach außen ungebördelten Rand 11 auf, mit dem sie in den Zugteil 25 eingehängt ist.

Vorteilhaft ist die Spreizhülse 7 im Bereich des Zugteiles 25 mit einer Verstauchung 30 versehen, um den Halt der Spreizhülse 7 im Zugteil 25 zu sichern. Das Spreizen der Spreizhülse 7 erfolgt wiederum durch Umkippen des Kipphebels 21, der in den Figuren der Zeichungen in der Lösestellung gezeigt ist.

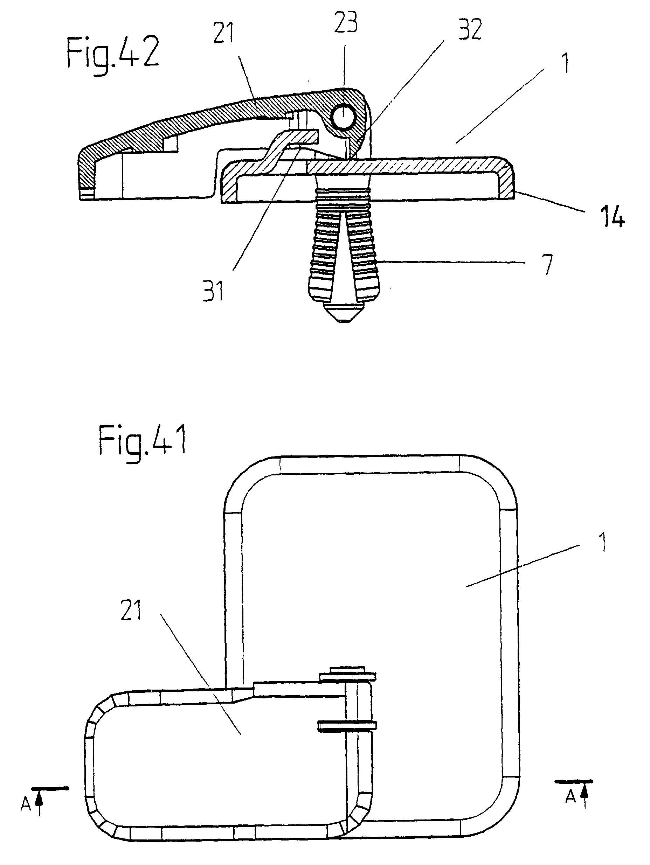

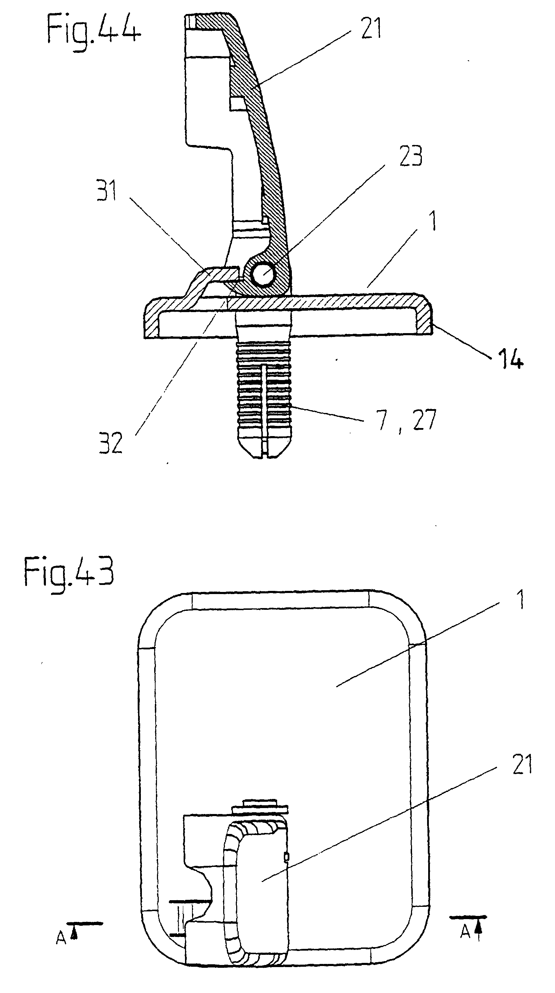

Im Ausführungsbeispiel nach den Fig. 41 bis 43 ist aus dem Beschlagkörper 1 ein Haken 31 ausgestanzt, der in der Lösestellung des Spannhebels von einer Nase 32 des Kipphebels 21 untergriffen wird. Auf diese Art und Weise ist es möglich, den Beschlagkörper 1 mittels des Kipphebels 21 vom Möbelteil 19 abzuziehen bzw. die Spreizhülse 7 aus der Bohrung 29 im Möbelteil 19 herauszuziehen, ohne daß vom Kipphebel 21 vom Kipphebel 21 ein Zug auf die Spreizhülse 7 oder den Spreizteil 2 ausgeübt wird.

In der Spannstellung des Kipphebels 21 liegt die Nase 32 am Beschlagkörper 1 an.

Der Beschlagkörper 1 ist in den meisten der gezeigten Ausführungsbeispiele plattenförmig mit einem Rand 14 ausgebildet, der sich am Möbelteil 19 abstützt. Vorzugsweise wird der Beschlagkörper 1 beim Spannen der Spreizhülse 7 leicht durchgedrückt, so daß eine federnde Verspannung entsteht.

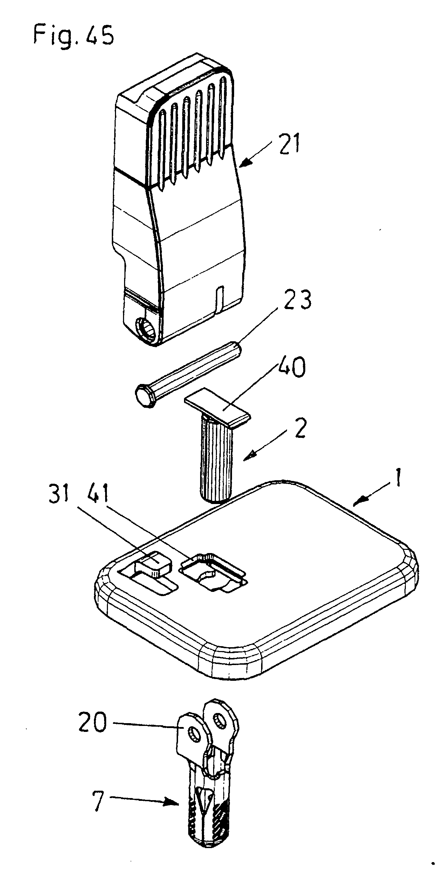

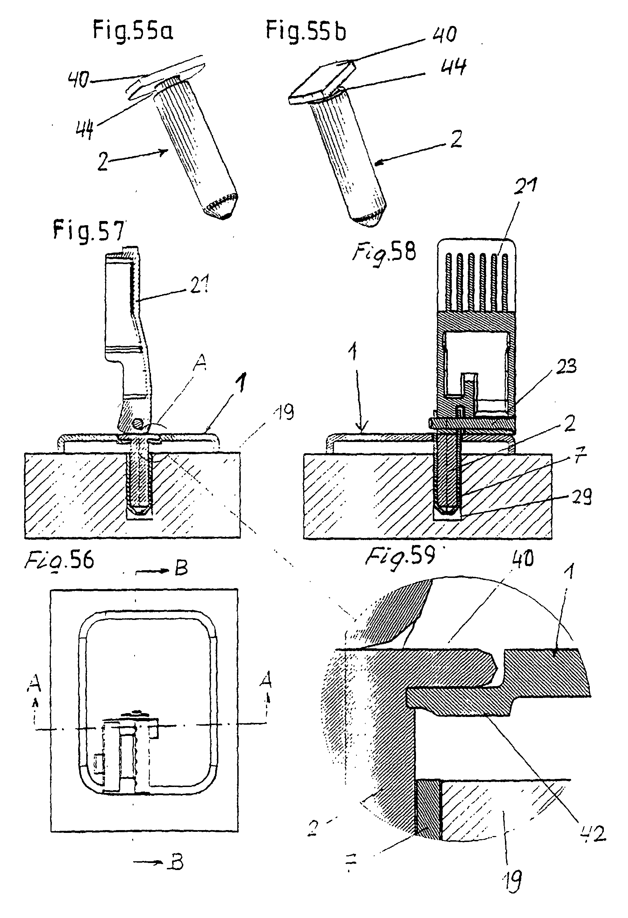

Im Ausführungsbeispiel nach den Fig. 45 bis 66 ist die Spreizhülse 7 wiederum mit zwei Laschen 20 versehen, die Löcher aufweisen, durch die der Bolzen 23 ragt, über den die Spreizhülse 7 an dem Kipphebel 21 angelenkt ist. Der Kipphebel 21 ist wieder mit einem Nocken 17 versehen, mit dem er sich in der Spannstellung am Spreizteil 2 abstützt.

Die Laschen 20 ragen dabei durch eine Öffnung bzw. Öffnungen im Beschlagkörper 1.

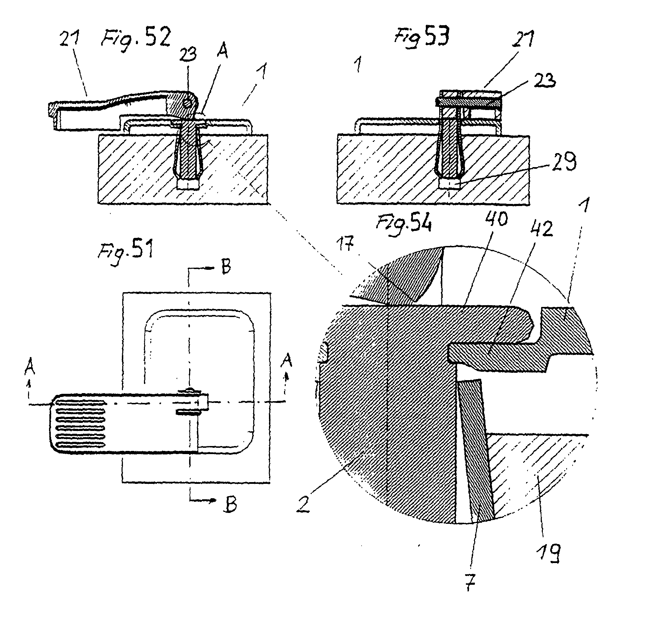

In der in den Fig. 45, 47, 48 und 49 gezeigten Position befindet sich der Spannhebel 21 in der Lösestellung und die Spreizhülse 7 ist mit dem Spreizteil 2 in die Bohrung 29 des Möbelteiles 19 einsetzbar. Anschließend wird der Kipphebel 21 in die in der Fig. 51, 52, 53 gezeigten Stellung gekippt, worauf die Spreizhülse 7 über den Bolzen 23 und die Laschen 20 zum Beschlagkörper 1 gezogen und gespreizt wird.

Die Spreizhülse 7 kann auch von zwei komplementären Schalen gebildet werden, die sich zu einer geschlossenen Hülse ergänzen und die wiederum Laschen 20 aufweisen, über die sie in den Bolzen 23 und somit in den Kipphebel 21 eingehängt sind.

Bei der Montage des Beschlages wird der Spreizteil 2 von der Sichtseite des Beschlagkörpers 1 her durch die Öffnung 9 durchgesteckt und ragt an der Montageseite des Beschlagkörpers 1 aus diesem heraus. Der Spreizteil 2 ist dabei an seinem beschlagkörperseitigen Ende mit einem Plättchen 40 versehen, das sichtflächenseitig in einer Aussparung 41 des Beschlagkörpers 1 aufgenommen ist.

Die Spreizhülse 7 wird von der Montageseite her in den Beschlagkörper 1 eingehängt und ragt mit ihren Laschen 20 durch Öffnungen im Beschlagkörper 1.

Die Aussparung 41 ist an ihrer zur Möbelwand 19 zugewandten Seite, d.h. an der Montageseite, von Laschen 42 abgegrenzt, die, nachdem der Spreizteil 2 in den Beschlagkörper 1 eingehängt wurde, gestaucht wurden, wodurch der Spreizteil 2 unverlierbar im Beschlagkörper 1 verankert ist. Die Lappen 42 ragen dabei entweder in Löcher 43 des hülsenförmigen Spreizteiles 2 oder in eine Ringnut 44 des Spreizteiles 2, wenn dieser als voller Zylinder ausgeführt ist. Die Ringnut 44 wird dabei vom Plättchen 40 und vom zylindrischen Körper des Spreizteiles 2 abgegrenzt.

Wie insbesondere aus der Fig. 50 ersichtlich, kann das Plättchen 40 gefalzt und auf diese Weise verstärkt ausgeführt sein.

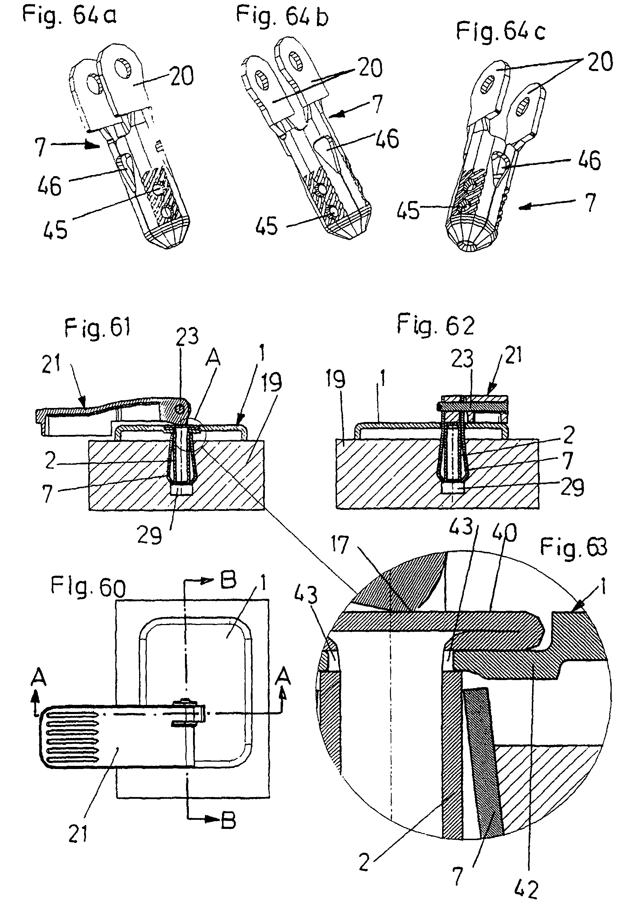

Die Spannhülse 7 ist, wie aus den Fig. 64a bis 64c ersichtlich, mit Öffnungen 45 und 46 versehen. Die Öffnungen 45 sind kreisförmig und die Öffnungen 46 tropfenförmig bzw. dreieckig ausgeführt.

Die Öffnungen 45, 46 können auch als Aussparung an den Rändern der von zwei Schalen gebildeten Spreizhülse 7 ausgeführt sein, wobei sich die Aussparung bei zusammengesetzter Spreizhülse 7 zu einer umfanggeschlossenen Öffnung ergänzen.

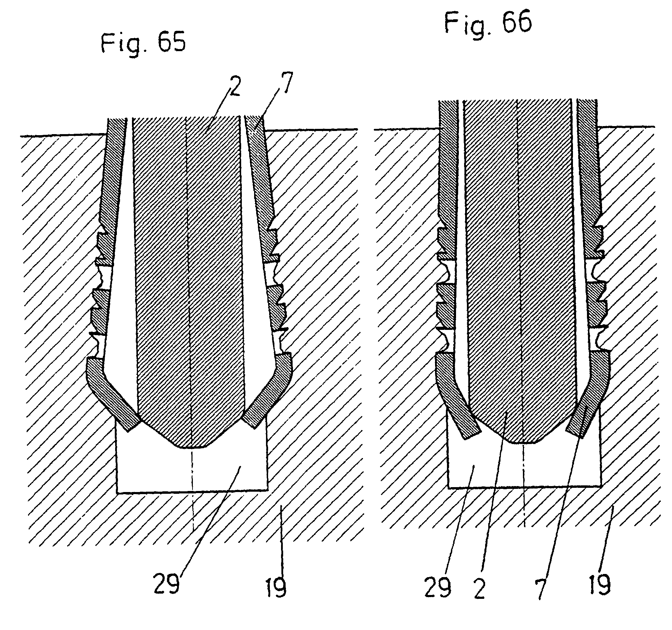

Diese Öffnungen 45, 46 verbessern die Deformierbarkeit der Spreizhülse 7, wodurch deren Halt im Holzmaterial, insbesondere bei einem Weichmaterial, verstärkt wird. Weiters wird der Halt der Spreizhülse 7 in der Möbelwand 19 noch dadurch verbessert, daß bei der Spreizung Teile des Holzmaterials, wie aus den Fig. 65 und 66 ersichtlich, in die Löcher 45, 46 eindringen und sich in der Spreizhülse 7 sozusagen verhaken.

## Patentansprüche

1. Beschlag zur lösbaren Befestigung an einem Möbelteil (19) mit einem am Möbelteil anliegenden Beschlagkörper (1), mindestens einer in eine Bohrung (29) des Möbelteiles einsetzbaren dübelartigen Spreizhülse (7), an deren Mantel mehrere in axialer Richtung versetzte Haltevorsprünge ausgebildet sind, und einem vorzugsweise stiftförmigen Spreizteil (2) für die Spreizhülse, der durch den Beschlagkörper ragt, wobei an der vom Möbelteil abgewandten Seite des Beschlagkörpers ein Spannteil (4) für die Spreizhülse angeordnet ist, der sich - vorzugsweise am Beschlagkörper-abstützt, **dadurch gekennzeichnet, daß** der Spreizteil (2) im Beschlagkörper (1) axial unverschiebbar gehalten ist und daß die Spreizhülse (7) mittels des Spannteiles relativ zum Spreizteil (2) und zum Beschlagkörper (1) axial bewegbar ist.

2. Beschlag nach Anspruch 1, **dadurch gekennzeichnet, daß** der Spreizteil (2) im Bereich der Spreizhülse (7) zylindrisch ist und vorzugsweise ein konisches Ende aufweist.

3. Beschlag nach Anspruch 1 oder 2, **dadurch gekennzeichnet, daß** der Spreizteil (2) zwei radial abstehende Zapfen aufweist, die in zumindest bereichsweise schräg zu den Erzeugenden der Spreizhülse (7) verlaufende Führungsschlitze (6) in der Spreizhülse (7) ragen.

4. Beschlag nach Anspruch 3, **dadurch gekennzeichnet, daß** die Führungsschlitze (6) abgewinkelt ausgeführt sind, mit einem entlang einer Umfanglinie der Spreizhülse (7) verlaufenden Bereich (6') und einem schräg zum Beschlagkörper (1) weisenden Bereich (6").

5. Beschlag nach Anspruch 3 oder 4, **dadurch gekennzeichnet, daß** die Zapfen von den Enden eines Bolzes (5) gebildet werden, der durch eine diametrische Bohrung (10) im Spreizteil (2) ragt.

6. Beschlag nach einem der Ansprüche 1 bis 4, **dadurch gekennzeichnet, daß** die Spreizhülse (7) mittels einer Verdrehsicherung im Beschlagkörper (1) verankert ist und daß der Spreizteil (2) über einen Griff (4) oder einen Werkzeugaufnahmeteil (13) relativ zur Spreizhülse (7) verdrehbar ist.

7. Beschlag nach Anspruch 6, **dadurch gekennzeichnet, daß** die Verdrehsicherung von zwei von der Spreizhülse (7) abstehenden Lappen (8) gebildet wird, die in korrespondierende Schlitze (9) oder Nuten im Beschlagkörper (1) ragen.

8. Beschlag nach einem der Ansprüche 1 bis 7, **dadurch gekennzeichnet, daß** der Beschlagkörper (1) als elastische Platte mit einem sich in Montagelage am Möbelteil (19) abstützenden Rand (14) ausgeführt ist.

9. Beschlag nach einem der Ansprüche 1 bis 8, **dadurch gekennzeichnet, daß** der Spreizteil (2) an seinem zum Beschlagkörper (1) weisenden Ende eine Schulter aufweist, an der der Beschlagkörper (1) anliegt.

10. Beschlag nach Anspruch 9, **dadurch gekennzeichnet, daß** der Spreizteil (2) an seinem Mantel mit mindestens einer Nut (15) versehen ist, in die der Beschlagkörper (1) ragt.

11. Beschlag nach Anspruch 6, **dadurch gekennzeichnet, daß** der Werkzeugaufnahmeteil (13) als Schraubenkopf, vorzugsweise für die Aufnahme eines Kreuzschraubenziehers ausgebildet ist.

12. Beschlag nach Anspruch 11, **dadurch gekennzeichnet, daß** der Werkzeugaufnahmeteil (13) einstückig mit dem Spreizteil (2) ausgeführt ist.

13. Beschlag nach Anspruch 1 oder 2, **dadurch gekennzeichnet, daß** die Spreizhülse (7) zwei diametral angeordnete und nach innen abstehende Zapfen (16) aufweist, die in zumindestens bereichsweise schräg zu den Erzeugenden des Spreizteiles (2) verlaufende Nuten (12) oder Schlitze des Spreizteiles (2) ragen.

14. Beschlag nach Anspruch 13, **dadurch gekennzeichnet, daß** die Nuten (12) abgewinkelt ausgeführt sind, mit einem entlang einer Umfangslinie des Spreizteiles (2) verlaufenden Bereich und einem schräg zum Beschlagkörper (1) weisenden Bereich.

15. Beschlag nach Anspruch 13, **dadurch gekennzeichnet, daß** die Zapfen (16) topfartig aus der Wandung der Spreizhülse (7) gepreßt sind.

16. Beschlag nach Anspruch 7, **dadurch gekennzeichnet, daß** der Beschlagkörper (1) bei der Spreizhülse (7) einen in die Bohrung (29) des Möbelteiles (19) ragenden ringförmigen Rand (33) aufweist, der mit Schlitzen versehen ist, in die die von der Spreizhülse (7) abstehenden Lappen (8) ragen, die die Verdrehsicherung bilden.

17. Beschlag nach Anspruch 16, **dadurch gekennzeichnet, daß** der Rand (33) am Innenmantel Noppen (33') aufweist, zwischen denen der Spreizteil (2) geführt ist.

18. Beschlag nach Anspruch 17, **dadurch gekennzeichnet, daß** die Spreizhülse (7) in der gespreizten Stellung am ringförmigen Rand (33) anliegt.

19. Beschlag nach einem der Ansprüche 1 bis 18, **dadurch gekennzeichnet, daß** an der Spreizhülse (7) zwei Laschen (20) angeformt sind, die durch separate Schlitze (22) des Beschlagkörpers (1) ragen und die an der vom Möbelteil (19) abgewandten Seite des Beschlagkörpers (1) an einem Spannteil angelenkt sind.

20. Beschlag nach Anspruch 19, **dadurch gekennzeichnet, daß** der Spannteil als Kipphebel (21) ausgeführt ist.

21. Beschlag nach einem der Ansprüche 1 bis 20, **dadurch gekennzeichnet, daß** die Spreizhülse (7) von zwei komplementären Halbschalen (27) gebildet wird.

22. Beschlag nach einem der Ansprüche 1 bis 21, **dadurch gekennzeichnet, daß** der Spreizteil (2) einen stirnseitig vorspringenden Zapfen (24) aufweist, der in einer Öffnung (26) des Beschlagkörpers (1) aufgenommen ist.

23. Beschlag nach einem der Ansprüche 1 bis 22, **dadurch gekennzeichnet, daß** die Spreizhülse (7) an ihrem zum Beschlagkörper (1) gewendeten Ende einen nach außen umgebördelten Rand (11) aufweist, mit dem sie in einen ringförmigen Zugteil (25) eingehängt ist, der zwei Laschen (28) aufweist, die durch separate Schlitze (22) des Beschlagkörpers (1) ragen und die, an der vom Möbelteil (19) abgewendeten Seite des Beschlagkörpers (1), an einem, vorzugsweise als Kipphebel (21) ausgebildeten Spannteil angelenkt sind.

24. Beschlag nach Anspruch 22, **dadurch gekennzeichnet, daß** der Zapfen (24) mit dem Beschlagkörper (1) vernietet ist.

25. Beschlag nach einem der Ansprüche 1 bis 24, **dadurch gekennzeichnet, daß** der Kipphebel (21) eine Nase (32) aufweist, mit der er in der Losestellung einen am Beschlagkörper (1) ausgebildeten Haken (31) hintergreift.

26. Beschlag nach Anspruch 25, **dadurch gekennzeichnet, daß** der Haken (31) aus dem plattenförmigen Beschlagkörper (1) ausgestanzt ist.

27. Beschlag nach Anspruch 25 oder 26, **dadurch gekennzeichnet, daß** die Nase (32) des Kipphebels (21) in der Lösestellung am Haken (31) und in der Spannstellung am Beschlagkörper (1) anliegt.

28. Beschlag nach einem der Ansprüche 1 bis 27, **dadurch gekennzeichnet, daß** der Beschlagkörper (1) zum Möbelteil (19) gerichtete Vorsprünge (18) aufweist, die den Spreizteil (2) in axialer Richtung arretieren.

29. Beschlag nach Anspruch 28, **dadurch gekennzeichnet, daß** die Vorsprünge (18) zum Spreizteil (2) gestaucht sind.

30. Beschlag nach Anspruch 17, **dadurch gekennzeichnet, daß** die Noppen (33') aus dem Rand (33) gepreßt sind und einen axialen Anschlag für den Spreizteil (2) bilden.

31. Beschlag nach einem der Ansprüche 1 bis 30, **dadurch gekennzeichnet, daß** der Spreizteil (2) von der Sichtfläche des Beschlagkörpers (1) her durch diesen durchgesteckt und durch Stauchung des Beschlagkörpers (1) in diesem fixiert ist und an seinem beschlagkörperseitigem Ende einen Anschlag aufweist, der am Beschlagkörper sichtflächenseitig anliegt.

32. Beschlag nach einem der Ansprüche 1 bis 31, **dadurch gekennzeichnet, daß** der Spreizteil (2) aus vergütetem Stahl gefertigt ist.

33. Beschlag nach einem der Ansprüche 1 oder 32, **dadurch gekennzeichnet, daß** der Spreizteil (2) aus gehärtetem Stahl gefertigt ist.

34. Beschlag nach einem der Ansprüche 1 bis 33, **dadurch gekennzeichnet, daß** der Spreizteil (2) als Stift mit vollem Querschnitt ausgeführt ist.

35. Beschlag nach einem der Ansprüche 1 bis 33, **dadurch gekennzeichnet, daß** der Spreizteil (2) als zylindrische Hülse ausgeführt ist.

36. Beschlag nach einem der Ansprüche 1 bis 35, **dadurch gekennzeichnet, daß** der Anschlag als am Spreizteil (2) stirnseitig angeordnetes bzw. ausgebildetes Plättchen (40) ausgeführt ist.

37. Beschlag nach Anspruch 36, **dadurch gekennzeichnet, daß** das Plättchen (40) in einer Vertiefung (41) an der Sichtflächenseite des Beschlagkörpers (1) aufgenommen ist.

38. Beschlag nach einem der Ansprüche 1 bis 37, **dadurch gekennzeichnet, daß** der Beschlagkörper (1) bei der Öffnung (9), durch die der Spreizteil (2) ragt, zwei Laschen (42) aufweist, zwischen denen der Spreizteil (2) gehalten ist.

39. Beschlag nach Anspruch 38, **dadurch gekennzeichnet, daß** die Laschen (42) in Öffnungen (43) in dem hülsenförmigen Spreizteil (2) oder in eine Nut (44) des stiftförmigen Spreizteiles (2) mit vollem Querschnitt ragen.

40. Beschlag nach Anspruch 38 oder 39, **dadurch gekennzeichnet, daß** die Laschen (42) gestaucht sind.

41. Beschlag nach Anspruch 36 oder 37, **dadurch gekennzeichnet, daß** das Plättchen (40) gefalzt ist.

42. Beschlag zur lösbaren Befestigung an einem Möbelteil mit einem am Möbelteil anliegenden plattenförmigen Beschlagkörper, mit einer möbelseitigen Montagefläche und einer gegenüberliegenden Sichtfläche, mindestens einer in eine Bohrung des Möbelteiles einsetzbaren Spreizhülse, und einem vorzugsweise stiftförmigen Spreizteil für die Spreizhülse, der durch eine Öffnung im Beschlagkörper ragt, in diesem verankert ist und an dessen Montagefläche vorsteht, wobei an der vom Möbelteil abgewandten Seite des Beschlagkörpers ein Spannteil für die Spreizhülse angeordnet ist, der sich - vorzugsweise am Beschlagkörper-abstützt und die Spreizhülse mittels des Spannteiles relativ zum Spreizteil und zum Beschlagkörper axial bewegbar ist, nach einem der Ansprüche 1 bis 41, **dadurch gekennzeichnet, daß** die Spreizhülse (7) im Mantel mit radial durchgehenden Öffnungen (45, 46) versehen ist.

43. Beschlag nach Anspruch 42, **dadurch gekennzeichnet, daß** die Spreizhülse (7) von zwei komplementären Schalen (27) gebildet wird, die an ihren seitlichen Rändern einander gegenüberliegende Aussparungen aufweisen, die sich in der unverspannten Stellung der Spreizhülse (7) zu einer umfanggeschlossenen Öffnung (45, 46) ergänzen.

44. Beschlag nach Anspruch 42 oder 43, **dadurch gekennzeichnet, daß** die Öffnungen (46) dreieck- oder tropfenförmig sind.

45. Beschlag nach einem der Ansprüche 42 bis 44, **dadurch gekennzeichnet, daß** im Mantel der Spreizhülse (7) kreisrunde oder annähernd kreisrunde Öffnungen (45) vorgesehen sind.

46. Beschlag nach einem der Ansprüche 1 bis 45, **dadurch gekennzeichnet, daß** zumindest die äußere Oberfläche der Spreizhülse (7) mit einer Phosphatschichtauflage versehen ist.

## Claims

1. A fitting for detachable fastening to a furniture part (19), with a fitting body (1) abutting the furniture part, with at least one dowel-like expansion sleeve (7), which can be inserted into a drilled hole (29) of the furniture part and on the casing of which are formed a plurality of axially offset gripping projections, and a preferably pin-shaped expansion portion (2) for the expansion sleeve, which expansion portion projects through the fitting body, there being arranged on the fitting body side further from the furniture part a clamping portion (4) for the expansion sleeve, which clamping portion is preferably supported on the fitting body, **characterised in that** the expansion portion (2) is held in an axially immovable manner in the fitting body (1) and that the expansion sleeve (7) is axially movable relative to the expansion portion (2) and the fitting body (1) by means of a clamping portion.

2. A fitting according to claim 1 **characterised in that** the expansion portion (2) is cylindrical in the region of the expansion sleeve (7) and preferably has a conical extremity.

3. A fitting according to claim 1 or claim 2 **characterised in that** the expansion portion (2) has two radially projecting pegs which project in the expansion sleeve (7) into guide slots (6) which extend, at least in some regions, at an angle to the generatrices of the expansion sleeve (7).

4. A fitting according to claim 3 **characterised in that** the guide slots (6) are of an angled design, having a region (6') extending along a circumferential line of the expansion sleeve (7) and a region (6") at an angle to the fitting body (1).

5. A fitting according to claim 3 or claim 4 **characterised in that** the pegs are formed by the extremities of a bolt (5) which projects through a diametrically drilled hole (10) in the expansion portion (2).

6. A fitting according to any one of claims 1 to 4 **characterised in that** the expansion sleeve (7) is anchored in the fitting body (1) by means of an anti-torsion device, and wherein the expansion portion (2) can be twisted relative to the expansion sleeve (7) by means of a handle (4) or a tool-accommodating portion (13).

7. A fitting according to claim 6 **characterised in that** the anti-torsion device is formed by two tabs (8) projecting from the expansion sleeve (7), which tabs project into corresponding slots (9) or grooves in the fitting body (1).

8. A fitting according to any one of claims 1 to 7 **characterised in that** the fitting body (1) is in the form of a flexible plate with a collar (14) which is supported on the furniture part (19) in the assembly position.

9. A fitting according to any one of claims 1 to 8 **characterised in that** the expansion portion (2), at its extremity facing the fitting body (1), has a shoulder which the fitting body (1) abuts.

10. A fitting according to claim 9 **characterised in that** the expansion portion (2) is provided on its casing with at least one groove (15), into which the fitting body (1) projects.

11. A fitting according to claim 6 **characterised in that** the tool-accommodating portion (13) is in the form of a screw head, preferably to accommodate a screwdriver for recessed-head screws.

12. A fitting according to claim 11 **characterised in that** the tool-accommodating portion (13) is formed in one piece with the expansion portion (2).

13. A fitting according to claim 1 or claim 2 **characterised in that** the expansion sleeve (7) has two diametrically arranged and inward-projecting pegs (16) which project into grooves (12) or slots of the expansion portion (2), which grooves or slots extend, at least in some regions, at an angle to the generatrices of the expansion portion (2).

14. A fitting according to claim 13 **characterised in that** the grooves (12) are of an angled design, having a region extending along a circumferential line of the expansion portion (2) and a region angled towards the fitting body (1).

15. A fitting according to claim 13 **characterised in that** the pegs (16) are pressed in a pot-like manner from the wall of the expansion sleeve (7).

16. A fitting according to claim 7 **characterised in that** the fitting body (1) has, at the expansion sleeve (7), an annular collar (33) which projects into the drilled hole (29) of the furniture part (19) and which is provided with slots, into which project the tabs (8) which project from the expansion sleeve (7) and form the anti-torsion device.

17. A fitting according to claim 16 **characterised in that** the collar (33) has, on its inner casing, nubs (33') between which the expansion portion (2) is guided.

18. A fitting according to claim 17 **characterised in that** the expansion sleeve (7) in its spread-apart position abuts the annular collar (33).

19. A fitting according to any one of claims 1 to 18 **characterised in that** there are moulded on the expansion sleeve (7) two brackets (20), which project through separate slots (22) of the fitting body (1) and which are articulated on a clamping portion on the side of the fitting body (1) further from the furniture part (19).

20. A fitting according to claim 19 **characterised in that** the clamping portion is in the form of a rocker arm (21).

21. A fitting according to any one of claims 1 to 20 **characterised in that** the expansion sleeve (7) is formed by two complementary half-dishes (27).

22. A fitting according to any one of claims 1 to 21 **characterised in that** the expansion portion (2) has a frontally projecting peg (24) which is accommodated in an opening (26) of the fitting body (1).

23. A fitting according to any one of claims 1 to 22 **characterised in that** the expansion sleeve (7) has, at its extremity facing the fitting body (1), an outwardly flanged collar (11) by which the said sleeve is secured in an annular traction portion (25) having two brackets (28) which project through separate slots (22) of the fitting body (1) and which, on the side of the fitting body (1) further from the furniture part (19), are articulated on a clamping portion which is preferably in the form of a rocker arm (21).

24. A fitting according to claim 22 **characterised in that** the peg (24) is riveted to the fitting body (1).

25. A fitting according to any one of claims 1 to 24 **characterised in that** the rocker arm (21) has a lug (32) with which, in the release position, the said arm engages behind a hook (31) formed on the fitting body (1).

26. A fitting according to claim 25 **characterised in that** the hook (31) is punched out of the plate-shaped fitting body (1).

27. A fitting according to claim 25 or claim 26 **characterised in that** the lug (32) of the rocker arm (21) abuts the hook (31) in the release position and the fitting body (1) in the clamping position.

28. A fitting according to any one of claims 1 to 27 **characterised in that** the fitting body (1) has projections (18) which extend towards the furniture part (19) and lock the expansion portion (2) in an axial direction.

29. A fitting according to claim 28 **characterised in that** the projections (18) are compressed towards the expansion portion (2).

30. A fitting according to claim 17 **characterised in that** the nubs (33') are pressed out of the collar (33) and form an axial stop for the expansion portion (2).

31. A fitting according to any one of claims 1 to 30 **characterised in that** from the visible surface of the fitting body (1), the expansion portion (2) is inserted through the said body and, by compression of the fitting body (1), is secured therein and has, at its extremity on the fitting body side, a stop which abuts the fitting body on the visible surface side.

32. A fitting according to any one of claims 1 to 31 **characterised in that** the expansion portion (2) is made from quenched and tempered steel.

33. A fitting according to one of claims 1 or 32 **characterised in that** the expansion portion (2) is made from hardened steel.

34. A fitting according to any one of claims 1 to 33 **characterised in that** the expansion portion (2) is in the form of a pin with a full cross-section.

35. A fitting according to any one of claims 1 to 33 **characterised in that** the expansion portion (2) is in the form of a cylindrical sleeve.

36. A fitting according to any one of claims 1 to 35 **characterised in that** the stop is in the form of a small plate (40) frontally arranged or formed on the expansion portion (2).

37. A fitting according to claim 36 **characterised in that** the small plate (40) is accommodated in an indentation (41) on the visible surface side of the fitting body (1).

38. A fitting according to any one of claims 1 to 37 **characterised in that** at the opening (9) through which the expansion portion (2) projects, the fitting body (1) has two brackets (42) between which the expansion portion (2) is held.

39. A fitting according to claim 38 **characterised in that** the brackets (42) project into openings (43) in the sleeve-shaped expansion portion (2) or into a groove (44) of the pin-shaped expansion portion (2) with a full cross-section.

40. A fitting according to claim 38 or claim 39 **characterised in that** the brackets (42) are compressed.

41. A fitting according to claim 36 or claim 37 **characterised in that** the small plate (40) is folded.

42. A fitting for detachable fastening to a furniture part, with a plate-shaped fitting body abutting the furniture part, with an assembly face on the furniture side and a visible surface on the other side, with at least one expansion sleeve which can be inserted into a drilled hole of the furniture part and a preferably pin-shaped expansion portion for the expansion sleeve, which expansion portion projects through an opening in the fitting body, is anchored therein and projects from the assembly face thereof, there being arranged on the fitting body side further from the furniture part a clamping portion for the expansion sleeve, which clamping portion is preferably supported on the fitting body, and the expansion sleeve being axially movable relative to the expansion portion and the fitting body by means of the clamping portion according to any one of claims 1 to 41 **characterised in that** the expansion sleeve (7) is provided in the casing with openings (45, 46) which pass radially therethrough.

43. A fitting according to claim 42 **characterised in that** the expansion sleeve (7) is formed by two complementary dishes (27) having on their lateral borders mutually opposite recesses which, when the expansion sleeve (7) is in the unbraced position, complement each other to form a circumferentially closed opening (45, 46).

44. A fitting according to claim 42 or claim 43 **characterised in that** the openings (46) are triangular or drop-shaped.

45. A fitting according to any one of claims 42 to 44 **characterised in that** circular or approximately circular openings (45) are provided in the casing of the expansion sleeve (7).

46. A fitting according to any one of claims 1 to 45 **characterised in that** at least the outer surface of the expansion sleeve (7) is provided with a phosphate layer coating.

## Revendications

1. Ferrure à fixer de manière séparable sur une partie de meuble (19), comprenant un corps de ferrure (1) reposant contre la partie de meuble, au moins une douille à expansion (7) en forme de cheville pouvant être insérée dans un orifice (29) de la partie de meuble et sur l'enveloppe de laquelle sont formées des saillies de retenue décalées dans le sens axial et une pièce à expansion (2), de préférence en forme de tige, pour la douille à expansion, ladite pièce à expansion traversant le corps de ferrure, une pièce de serrage (4) destinée à la douille à expansion et s'appuyant de préférence au corps de ferrure étant disposée du côté du corps de ferrure opposé à la partie de meuble, **caractérisé en ce que** la pièce à expansion (2) est maintenue dans le corps de ferrure (1) de manière fixe dans le sens axial et la douille à expansion (7) est mobile dans le sens axial relativement à la pièce à expansion (2) et au corps de ferrure (1) au moyen de la pièce de serrage.

2. Ferrure selon la revendication 1, **caractérisée en ce que** la pièce à expansion (2) est cylindrique dans la zone de la douille à expansion (7) et présente de préférence une extrémité conique.

3. Ferrure selon la revendication 1 ou 2, **caractérisée en ce que** la pièce à expansion (2) présente deux tenons dépassant dans le sens radial, qui pénètrent dans des rainures de guidage (6) situées dans la douille à expansion (7) et orientées au moins par endroits à l'oblique par rapport aux génératrices de la douille à expansion (7).

4. Ferrure selon la revendication 3, **caractérisée en ce que** les rainures de guidage (6) sont coudées, avec une zone (6') orientée le long d'une ligne de circonférence de la douille à expansion (7) et une zone (6") orientée à l'oblique par rapport au corps de ferrure (1).

5. Ferrure selon la revendication 3 ou 4, **caractérisée en ce que** les tenons sont formés par les extrémités d'une goupille (5) qui traverse un orifice (10) passant par un diamètre de la pièce à expansion (2).

6. Ferrure selon l'une des revendications 1 à 4, **caractérisée en ce que** la douille à expansion (7) est ancrée dans le corps de ferrure (1) au moyen d'un dispositif de blocage de torsion et la pièce à expansion (2) peut tourner relativement à la douille à expansion (7) par l'intermédiaire d'une poignée (4) ou d'une pièce permettant de loger un outil (13).

7. Ferrure selon la revendication 6, **caractérisée en ce que** le dispositif de blocage de torsion est formé par deux languettes (8) dépassant de la douille à expansion (7) et pénétrant dans des rainures (9) ou des encoches correspondantes situées dans le corps de ferrure (1).

8. Ferrure selon l'une des revendications 1 à 7, **caractérisée en ce que** le corps de ferrure (1) est réalisé comme une plaque élastique avec un bord (14) s'appuyant sur la partie de meuble (19) dans la position de montage.

9. Ferrure selon l'une des revendications 1 à 8, **caractérisée en ce que** la pièce à expansion (2) présente, à son extrémité regardant vers le corps de ferrure (1), une épaule contre laquelle repose le corps de ferrure (1).

10. Ferrure selon la revendication 9, **caractérisée en ce que** la pièce à expansion (2) est munie sur son enveloppe d'au moins une encoche (15) dans laquelle le corps de ferrure (1) pénètre.

11. Ferrure selon la revendication 6, **caractérisée en ce que** la pièce permettant de loger un outil (13) est conçue comme une tête des vis, de préférence pour recevoir un tournevis cruciforme.

12. Ferrure selon la revendication 11, **caractérisée en ce que** la pièce permettant de loger un outil (13) est réalisée d'un seul tenant avec la pièce à expansion (2).

13. Ferrure selon la revendication 1 ou 2, **caractérisée en ce que** la douille à expansion (7) présente deux tenons (16) disposés de manière diamétralement opposée et dépassant vers l'intérieur, qui pénètrent dans des encoches (12) ou des rainures de la pièce à expansion (2) orientées au moins par endroits à l'oblique par rapport aux génératrices de la pièce à expansion (2).

14. Ferrure selon la revendication 13, **caractérisée en ce que** les encoches (12) sont coudées, avec une zone orientée le long d'une ligne de circonférence de la pièce à expansion (2) et une zone orientée à l'oblique par rapport au corps de ferrure (1).

15. Ferrure selon la revendication 13, **caractérisée en ce que** les tenons (16) sont emboutis en creux dans la paroi de la douille à expansion (7).

16. Ferrure selon la revendication 7, **caractérisée en ce que** le corps de ferrure (1) présente, près de la douille à expansion (7), un bord annulaire (33) qui pénètre dans l'orifice (29) de la partie de meuble (19) et est muni de rainures dans lesquelles pénètrent les languettes (8) dépassant de la douille à expansion (7) et formant le dispositif de blocage de torsion.

17. Ferrure selon la revendication 16, **caractérisée en ce que** le bord (33) présente, sur le pourtour intérieur, des boutons (33') entre lesquelles la pièce à expansion (2) et guidée.

18. Ferrure selon la revendication 17, **caractérisée en ce que** la douille à expansion (7) repose, dans la position expansée, contre le bord annulaire (33).

19. Ferrure selon l'une des revendications 1 à 18, **caractérisée en ce que** deux pattes (20) sont formées sur is douille à expansion (7), qui traversent des rainures séparées (22) du corps de ferrure (1) et sont articulées à une pièce de serrage du côté du corps de ferrure (1) opposé à la partie de meuble (19).

20. Ferrure selon la revendication 19, **caractérisée en ce que** la pièce de serrage est réalisée comme un levier culbuteur (21).

21. Ferrure selon l'une des revendications 1 à 20, **caractérisée en ce que** la douille à expansion (7) est formée par deux demi-coques (27) complémentaires.

22. Ferrure selon l'une des revendications 1 à 21, **caractérisée en ce que** la pièce à expansion (2) présente un tenon (24) faisant saillie du côté frontal et logé dans une ouverture (26) du corps de ferrure (1).

23. Ferrure selon l'une des revendications 1 à 22, **caractérisée en ce que** la douille à expansion (7) présente, à son extrémité tournée vers le corps de ferrure (1), un bord (11) rabattu vers l'extérieur par lequel elle est accrochée dans une pièce de traction (25) annulaire munie de deux pattes (28) qui traversent des rainures séparées (22) du corps de ferrure (1) et qui, du côté du corps de ferrure (1) opposé à la partie de meuble (19), sont articulées à une pièce de serrage conçue de préférence comme un levier culbuteur (21).

24. Ferrure selon la revendication 22, **caractérisée en ce que** le tenon (24) est riveté avec le corps de ferrure (1).

25. Ferrure selon l'une des revendications 1 à 24, **caractérisée en ce que** le levier culbuteur (21) présente un ergot (32) avec lequel il s'engage, dans la position de desserrage, derrière un crochet (31) formé sur le corps de ferrure (1).

26. Ferrure selon la revendication 22, **caractérisée en ce que** le crochet (31) est découpé dans le corps de ferrure (1) en forme de plaque.

27. Ferrure selon la revendication 25 ou 26, **caractérisée en ce que** l'ergot (32) du levier culbuteur (21) repose, dans la position de desserrage, contre le crochet (31) et, dans la position de serrage, contre le corps de ferrure (1).

28. Ferrure selon l'une des revendications 1 à 27, **caractérisée en ce que** le corps de ferrure (1) présente des saillies (18) orientées vers la partie de meuble (19), qui bloquent la pièce à expansion (2) dans le sens axial.

29. Ferrure selon la revendication 28, **caractérisée en ce que** les saillies (18) sont comprimées vers la pièce à expansion (2).

30. Ferrure selon la revendication 17, **caractérisée en ce que** les boutons (33') sont emboutis dans le bord (33) et forment une butée axiale pour la pièce à expansion (2).

31. Ferrure selon l'une des revendications 1 à 30, **caractérisée en ce que** la pièce à expansion (2) est enfoncée à partir de la face visible du corps de ferrure (1) en traversant celui-ci et est fixée dedans par compression du corps de ferrure (1) et présente, à son extrémité du côté du corps de ferrure, une butée qui repose du côté de la face visible contre le corps de ferrure.

32. Ferrure selon l'une des revendications 1 à 31, **caractérisée en ce que** la pièce à expansion (2) est réalisée en acier trempé et revenu.

33. Ferrure selon l'une des revendications 1 à 32, **caractérisée en ce que** la pièce à expansion (2) est réalisée en acier trempé.

34. Ferrure selon l'une des revendications 1 à 33, **caractérisée en ce que** la pièce à expansion (2) est réalisée comme une tige à section pleine.

35. Ferrure selon l'une des revendications 1 à 33, **caractérisée en ce que** la pièce à expansion (2) est réalisée comme une douille cylindrique.

36. Ferrure selon l'une des revendications 1 à 35, **caractérisée en ce que** la butée est réalisée comme une plaquette (40) disposée ou formé du côté frontal sur la pièce à expansion (2).

37. Ferrure selon la revendication 36, **caractérisée en ce que** la plaquette (40) est logée dans une cavité (41) située du côté de la face visible du corps de ferrure (1).

38. Ferrure selon l'une des revendications 1 à 37, **caractérisée en ce que** le corps de ferrure (1), présente, à l'ouverture (9) traversée par la pièce à expansion (2), deux pattes (42) entre lesquelles la pièce à expansion (2) est maintenue.

39. Ferrure selon la revendication 38, **caractérisée en ce que** les pattes (42) pénètrent dans des ouvertures (43) pratiquées dans la pièce à expansion (2) en forme de douille ou dans une encoche (44) réalisée dans la pièce à expansion (2) en forme de tige à section pleine.

40. Ferrure selon la revendication 38 ou 39, **caractérisée en ce que** les pattes (42) sont comprimées.

41. Ferrure selon la revendication 36 ou 37, **caractérisée en ce que** la plaquette (40) est pliée.

42. Ferrure à fixer de manière séparable sur une partie de meuble, comprenant un corps de ferrure en forme de plaque reposant contre la partie de meuble, avec une face de montage côté meuble et une face visible opposée, au moins une douille à expansion pouvant être insérée dans un orifice de la partie de meuble et une pièce à expansion, de préférence en forme de tige, pour la douille à expansion, qui traverse une ouverture dans le corps de ferrure, est ancrée dans celui-ci et dépasse de sa face de montage, une pièce de serrage pour la douille à expansion étant disposée côté du corps de ferrure opposé à la partie de meuble, ladite pièce de serrage s'appuyant de préférence sur le corps de ferrure, et la douille de serrage étant mobile dans le sens axial relativement à la pièce à expansion et au corps de ferrure au moyen de la pièce de serrage, selon l'une des revendications 1 à 41, **caractérisée en ce que** la douille à expansion (7) est munie dans l'enveloppe d'ouvertures (45, 46) la traversant dans le sens radial.

43. Ferrure selon la revendication 42, **caractérisée en ce que** la douille à expansion (7) est formée par deux coques (27) complémentaires qui présentent sur leurs bords latéraux des évidements opposés l'un à l'autre qui se complètent, lorsque la douille à expansion (7) est dans la position non serrée, pour former un ouverture (45, 46) fermée sur son pourtour.

44. Ferrure selon la revendication 42 ou 43, **caractérisée en ce que** les ouvertures (46) sont en forme de triangle ou de goutte.

45. Ferrure selon l'une des revendications 42 à 44, **caractérisée en ce que** des ouvertures (45) rondes ou pratiquement rondes sont prévues dans l'enveloppe de la douille à expansion (7).

46. Ferrure selon l'une des revendications 1 à 45, **caractérisée en ce qu'**au moins la surface extérieure de la douille à expansion (7) est munie d'une couche de phosphate.
